# EUROPEAN PATENT SPECIFICATION

(11) **EP 4 186 405 B1**
(45) Date of publication and mention of the grant of the patent: **28.10.2026**
(21) Application number: 21886565.7
(22) Date of filing: 17.09.2021
(51) Int. Cl.: A47L 9/00, A47L 9/28, G05D 1/00

(54) **ROBOT CLEANER AND DRIVING METHOD THEREOF**
REINIGUNGSROBOTER UND ANSTEUERUNGSVERFAHREN DAFÜR
ROBOT NETTOYEUR ET PROCÉDÉ D'ENTRAÎNEMENT ASSOCIÉ

(30) Priority: 28.10.2020 KR 20200141407
(43) Date of publication of application: 31.05.2023
(73) Proprietor: Samsung Electronics Co., Ltd., Suwon-si, Gyeonggi-do 16677 (KR)
(72) Inventor: KIM, Injoo, Suwon-si Gyeonggi-do 16677 (KR); KIM, Kyongsu, Suwon-si Gyeonggi-do 16677 (KR); KIM, Hankyeol, Suwon-si Gyeonggi-do 16677 (KR); SONG, Sukhoon, Suwon-si Gyeonggi-do 16677 (KR); SHIN, Dongmin, Suwon-si Gyeonggi-do 16677 (KR); CHAE, Sangwuk, Suwon-si Gyeonggi-do 16677 (KR); HONG, Junu, Suwon-si Gyeonggi-do 16677 (KR)
(74) Representative: Gulde & Partner
(86) International application number: PCT/KR2021/012782
(87) International publication number: WO 2022/092571

(56) References cited:
- WO-A1-2018/124534
- JP-A- 2016 051 343
- JP-A- 2018 196 824
- KR-A- 20190 103 511
- KR-A- 20200 070 087
- KR-B1- 101 649 665
- KR-B1- 101 930 870
- US-A1- 2017 215 672

## Description

### [Technical Field]

The invention relates to a robot cleaner and a controlling method thereof. More particularly, the disclosure relates to a robot cleaner which suctions foreign materials such as dirt and dust that are present at a surface to be cleaned and a controlling method thereof.

### [Background Art]

In general, robots have been developed for industrial use and are widely used at various industrial sites. Recently, fields that use robots have further expanded, and robots are being utilized in not only the medical field and in aerospace, but also at typical households.

Among the robots used in homes, a robot cleaner is most representative. The robot cleaner performs a cleaning function by suctioning foreign materials such as dust while driving on its own in an indoor space within a home.

For example, US 2017/0215672 A1 discloses a vacuum cleaner main body including a main body case, a camera provided in the main body case and that can perform imaging at a given angle of view, a driving wheel that allows the main body case to travel, and a controller. KR 20200070087 A describes an autonomously traveling mobile robot and a traveling control method thereof, which can control the traveling of the mobile robot according to a first traveling mode in which the mobile robot travels by following obstacles located around the mobile robot or a second traveling mode in which the mobile robot travels in consideration of a positional relation with an existing traveling trajectory through which the mobile robot has already traveled, and generate candidate spots where the mobile robot can travel while the mobile robot travels along the traveling trajectory to implement a spiral cleaning pattern. WO 2018/124534 A1relates to a robot cleaner comprising a body including a driving unit for moving; a location identification unit disposed in the body to identify a location of the body; a storage unit for storing, in a map, an area which the body has cleaned while moving in the area, by the driving unit; and a control unit for controlling the driving unit, wherein when a return condition where the body is required to return to a charging stand is satisfied, the control unit determines whether a cleaning-completion area in a map stored in the store unit includes the charging stand, searches a non-cleaning area when the charging stand does not exist in the cleaning-completion area, and controls the driving unit to move the body from the current location to a point of a searched non-cleaning area or a point around the searched non-cleaning area.

As described above, with an increase in users using robot cleaners, there is a need to find a method for controlling the robot cleaner more efficiently.

### [Disclosure]

### [Technical Problem]

The invention has been devised according to the above-described necessity, and an object of the d invention lies in providing a robot cleaner that uses different driving methods for obstacles according to types of obstacles and a driving method thereof.

### [Technical Solution]

According to the present invention, a robot cleaner includes a driver, a sensor, a memory stored with a map of a space in which the robot cleaner is located, and a processor configured to control the driver for the robot cleaner to drive in a cleaning region included in the map based on information obtained through the sensor, and the processor is configured to identify a type of an obstacle located in the cleaning region while the robot cleaner is driving in the cleaning region, and control the driver to change a driving direction of the robot cleaner from different spaced distances for obstacles of different types.

According to the present invention, the processor is configured to control, based on the obstacle being identified as an obstacle of a first type, the driver for the robot cleaner to change the driving direction from a point that is spaced apart from the obstacle of the first type by a first distance, and control, based on the obstacle being identified as an obstacle of a second type, the driver for the robot cleaner to change the driving direction from a point that is spaced apart from the obstacle of the second type by a second distance, and the second distance is shorter than the first distance.

According to the present invention, the processor is configured to control the driver for the robot cleaner to drive in a zigzag pattern by changing the driving direction of the robot cleaner from the point that is spaced apart from the obstacle of the first type by the first distance, and control the driver for the robot cleaner to rotate about the obstacle of the second type by changing the driving direction of the robot cleaner from the point that is spaced apart from the obstacle of the second type by the second distance.

The processor may be configured to control, based on a driving of the cleaning region being completed, the driver for the robot cleaner to drive along the obstacle of the first type.

According to the present invention, the processor is configured to identify a size of the obstacle of the second type, control, based on the size of the obstacle of the second type being less than a threshold size, the driver for the robot cleaner to drive in a same direction as a previous driving direction after rotating about the obstacle of the second type, and control, based on the size of the obstacle of the second type being greater than or equal to the threshold size, the driver for the robot cleaner to drive in a zigzag pattern after rotating about the obstacle of the second type.

The processor may be configured to identify a size of the obstacle of the second type based on information obtained through the sensor while the robot cleaner rotates about the obstacle of the second type by one rotation, control, based on the size of the obstacle of the second type being less than the threshold size, the driver for the robot cleaner to drive in the same direction as the previous driving direction after having additionally rotated about the obstacle of the second type by half a rotation, and control, based on the size of the obstacle of the second type being greater than or equal to the threshold size, the driver for the robot cleaner to drive in one side region in the zigzag pattern with respect to the obstacle of the second type.

The processor may be configured to control, based on the robot cleaner moving by a threshold distance while rotating about the obstacle of the second type by one rotation, the driver for the robot cleaner to return again to its original location after having reversed by a predetermined distance and for the robot cleaner to move again from the returned location.

The map may be divided into a plurality of regions, and the plurality of regions may include a first region and a second region which are connected through a gate, and the processor may be configured to control, based on the cleaning region being the first region, the driver for the robot cleaner to drive in the first region based on a first division line set at the gate, and control, based on the cleaning region being the second region, the driver for the robot cleaner to drive in the second region based on a second division line set at the gate, and the first division line and the second division line may be set at different locations within the gate.

According to a second aspect of the present invention, a driving method of a robot cleaner is provided which includes a sensor, the method including identifying a type of obstacle located in a cleaning region while driving in the cleaning region included in a map based on information obtained through the sensor, and changing a driving direction from different spaced distances for different type obstacles while driving in the cleaning region.

According to the present invention, the changing the driving direction includes changing, based on the obstacle being identified as an obstacle of a first type, the driving direction from a point that is spaced apart from the obstacle of the first type by a first distance, and changing, based on the obstacle being identified as an obstacle of a second type, the driving direction from a point that is spaced part from the obstacle of the second type by a second distance, and the second distance may be shorter than the first distance.

According to the present invention , the changing the driving direction further includes driving in a zigzag pattern by changing the driving direction from the point that is spaced apart from the obstacle of the first type by the first distance, and rotating about the obstacle of the second type by changing the driving direction from the point that is spaced part from the obstacle of the second type by the second distance.

The driving method according to the disclosure may further include driving, based on a driving of the cleaning region being completed, along the obstacle of the first type.

The driving method according to the present invention further includes identifying a size of the obstacle of the second type, driving, based on the size of the obstacle of the second type being less than a threshold size, in a same direction with a previous driving direction after rotating about the obstacle of the second type, and driving, based on the size of the obstacle of the second type being greater than or equal to the threshold size, in a zigzag pattern after rotating about the obstacle of the second type.

The identifying the size of the obstacle of the second type may include identifying the size of the obstacle of the second type based on information obtained through the sensor while rotating about the obstacle of the second type by one rotation, the driving in the same direction may include driving, based on the size of the obstacle of the second type being less than the threshold size, in the same direction as the previous driving direction after having additionally rotated about the obstacle of the second type by half a rotation, and the driving in the zigzag pattern may include driving, based on the size of the obstacle of the second type being greater than or equal to the threshold size, in one side region in the zigzag pattern with respect to the obstacle of the second type.

The driving method according to the disclosure may further include returning, based on moving by a threshold distance while rotating about the obstacle of the second type by one rotation, again to its original location after having reversed by a predetermined distance, and moving again from the returned location.

The map may be divided into a plurality of regions, and the plurality of regions may include a first region and a second region which are connected through a gate, and the driving method according to the disclosure may include driving, based on the cleaning region being the first region, in the first region based on a first division line set at the gate, and driving, based on the cleaning region being the second region, in the second region based on a second division line set at the gate, and the first division line and the second division line may be set at different locations within the gate.

### [Effect of Invention]

According to various embodiments of the present invention, a cleaning speed and a cleaning performance may be enhanced in that a robot cleaner may perform cleaning using different driving methods according to types of obstacles.

### [Description of Drawings]

FIG. 1A and FIG. 1B are diagrams illustrating a robot cleaner according to an embodiment of the present invention;
FIG. 2 is a block diagram illustrating a configuration of a robot cleaner according to an embodiment of the present invention;
FIG. 3 is a diagram illustrating a driving method of a robot cleaner which uses a zigzag pattern according to an embodiment of the present invention;
FIG. 4 and FIG. 5 are diagrams illustrating a method of identifying types of obstacles by a robot cleaner according to an embodiment of the present invention;
FIG. 6 and FIG. 7 are diagrams illustrating a driving method of a robot cleaner based on types of obstacles according to an embodiment of the present invention;
FIG. 8 is a diagram illustrating a method of identifying a size of an obstacle by a robot cleaner according to an embodiment of the present invention;
FIG. 9A, FIG. 9B, FIG. 10A, FIG. 10B, and FIG. 11 are diagrams illustrating a driving method of a robot cleaner based on types of obstacles according to an embodiment of the present invention;
FIG. 12 is a diagram illustrating an example of a driving method of a robot cleaner according to an embodiment of the present invention;
FIG. 13A and FIG. 13B are diagrams illustrating an example of a driving method of a robot cleaner according to an embodiment of the present invention;
FIG. 14 to FIG. 16B are diagrams illustrating a reverse operation of a robot cleaner according to an embodiment of the present invention;
FIG. 17 is a diagram illustrating a method of driving a region based on a division line by a robot cleaner according to an embodiment of the present invention;
FIG. 18 and FIG. 19 are diagrams illustrating a method of a user command with respect to a robot cleaner being input according to an embodiment of the present invention;
FIG. 20 is a block diagram illustrating a detailed configuration of a robot cleaner according to an embodiment of the present invention; and
FIG. 21 is a flowchart illustrating a driving method of a robot cleaner according to an embodiment of the present invention.

### [Best Mode]

-

### [Mode for Invention]

Various modifications may be made to the embodiments of the present invention, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, and should be interpreted to include various modifications, equivalents or alternatives of the embodiments of the disclosure. With respect to the description of the drawings, like reference numerals may be used for like elements.

In describing the disclosure, in case it is determined that the detailed description of related known technologies may unnecessarily confuse the gist of the disclosure, the detailed description thereof will be omitted.

Terms used in the disclosure have been used to merely describe a specific embodiment, and it is not intended to limit the scope of protection. A singular expression may include a plural expression, unless otherwise specified.

In the disclosure, expressions such as "have," "may have," "include," "may include," or the like are used to designate a presence of a corresponding characteristic (e.g., elements such as numerical value, function, operation, or component), and not to preclude a presence or a possibility of additional characteristics.

In the disclosure, expressions such as "A or B," "at least one of A and/or B," or "one or more of A and/or B" may include all possible combinations of the items listed together. For example, "A or B," "at least one of A and B," or "at least one of A or B" may refer to all cases including (1) at least one A, (2) at least one B, or (3) both of at least one A and at least one B.

Expressions such as "first," "second," "1st," "2nd," and so on used herein may be used to refer to various elements regardless of order and/or importance. Further, it should be noted that the expressions are merely used to distinguish an element from another element and not to limit the relevant elements.

When a certain element (e.g., first element) is indicated as being "(operatively or communicatively) coupled with/to" or "connected to" another element (e.g., second element), it may be understood as the certain element being directly coupled with/to the another element or as being coupled through other element (e.g., third element).

On the other hand, when a certain element (e.g., first element) is indicated as "directly coupled with/to" or "directly connected to" another element (e.g., second element), it may be understood as the other element (e.g., third element) not being present between the certain element and the another element.

The expression "configured to... (or set up to)" used in the disclosure may be used interchangeably with, for example, "suitable for...," "having the capacity to...," "designed to...," "adapted to...," "made to...," or "capable of..." based on circumstance. The term "configured to... (or set up to)" may not necessarily mean "specifically designed to" in terms of hardware.

Rather, in a certain circumstance, the expression "a device configured to..." may mean something that the device "may perform..." together with another device or components. For example, the phrase "a processor configured to (or set up to) perform A, B, or C" may mean a dedicated processor for performing a corresponding operation (e.g., embedded processor), or a generic-purpose processor (e.g., a central processing unit (CPU) or an application processor) capable of performing the corresponding operations by executing one or more software programs stored in the memory device.

The term "module" or "part" used in the embodiments herein perform at least one function or operation, and may be implemented with a hardware or software, or implemented with a combination of hardware and software. Further, a plurality of "modules" or a plurality of "parts," except for a "module" or a "part" which needs to be implemented to a specific hardware, may be integrated to at least one module and implemented in at least one processor.

The various elements and regions of the drawings have been schematically illustrated. Accordingly, the technical idea of the disclosure is not limited by relative sizes and intervals illustrated in the accompanied drawings.

Embodiments of the disclosure will be described in detail with reference to the accompanying drawings to aid in the understanding of those of ordinary skill in the art.

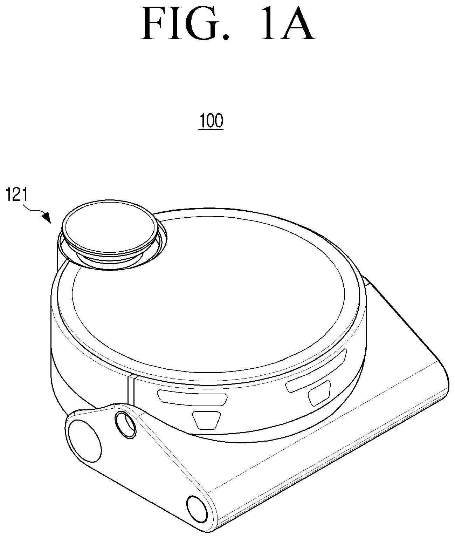

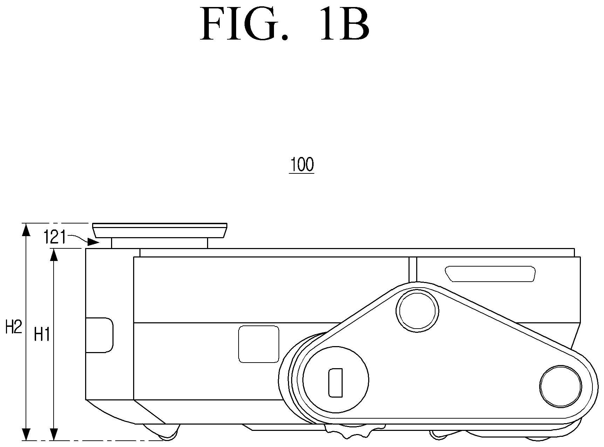

FIG. 1A and FIG. 1B are diagrams illustrating a robot cleaner according to an embodiment of the invnetion.

Referring to FIG. 1A and FIG. 1B, a robot cleaner 100 may drive in a space in which the robot cleaner is located. That is, the robot cleaner 100 may perform a cleaning operation while moving in the space in which the robot cleaner 100 is located.

Here, the space may include various indoor spaces in which the robot cleaner 100 can drive such as, for example, and without limitation, a house, an office, a hotel, a factory, a shop, and the like.

In addition, the cleaning operation may refer to the robot cleaner 100 suctioning foreign materials such as dirt and dust that are present at a floor surface. To this end, the robot cleaner 100 may include a cleaning device (i.e., cleaning tool) for suctioning foreign materials. The cleaning device may include a brush which is rotatably installed to collect foreign materials, and suction the foreign materials from the floor surface by generating a suction force through a motor and the like. At this time, the suctioned foreign materials may be contained in a dust container provided in the robot cleaner 100.

A driving method of the robot cleaner 100 according to various embodiments of the invention will be described below with reference to the accompanied drawings.

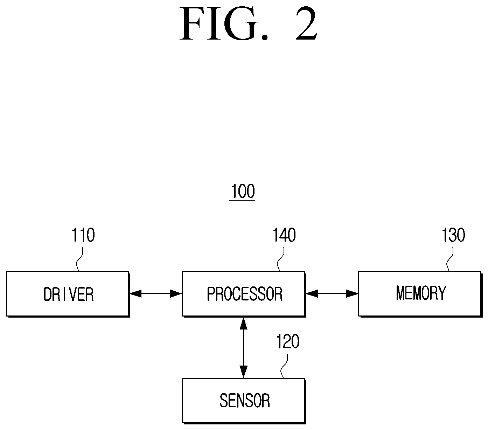

FIG. 2 is a block diagram illustrating a configuration of the robot cleaner according to an embodiment of the invention.

Referring to FIG. 2, the robot cleaner 100 may include a driver 110, a sensor 120, a memory 130, and a processor 140.

The driver 110 may be a configuration for moving the robot cleaner 100. For example, the driver 110 may include wheels which are respectively installed at a left side and a right side of a main body of the robot cleaner 100, a motor for operating the wheels, and the like. Accordingly, the driver 110 may perform various driving operations such as, for example, and without limitation, moving, stopping, controlling speed, changing direction, changing acceleration, and the like of the robot cleaner 100.

The sensor 120 may obtain various information associated with the robot cleaner 100 and surroundings of the robot cleaner 100.

Here, the sensor 120 may include a light detection and ranging (LiDAR) sensor (or, a laser distance sensor (LDS)).

For example, referring to FIG. 1A and FIG. 1B, a LiDAR sensor 121 may irradiate a laser rotating 360 degrees between height H1 and height H2, and detect a distance between the robot cleaner 100 and a surrounding object. For example, the LiDAR sensor may irradiate a laser while rotating 360 degrees. Then, the LiDAR sensor may detect, when the irradiated laser is reflected from an object in the surroundings of the robot cleaner 100 and received, a distance with the object based on a time at which the laser is received, or detect a distance with the object by measuring a phase difference of the received laser.

In addition, the sensor 120 may include a gyro sensor. The gyro sensor may detect an acceleration of the robot cleaner 100.

In addition, the sensor 120 may include an encoder. The encoder may detect revolutions of wheels that are respectively installed at the left side and the right side of the main body of the robot cleaner 100.

The memory 130 may be stored with at least one instruction and at least one software program for operating the robot cleaner 100. In this case, the memory 130 may include a semiconductor memory such as a flash memory, and the like. In the disclosure, the term memory 130 may be used as a meaning that includes the memory 130, a read only memory (ROM; not shown) within the processor 140, a random access memory (RAM; not shown), or a memory card (not shown) mounted to the robot cleaner 100 (e.g., micro SD card, a memory stick).

The processor 140 may control the overall operation of the robot cleaner 100. Specifically, the processor 140 may be coupled with a configuration of the robot cleaner 100 that includes the driver 110, the sensor 120, and the memory 130, and may control the overall operation of the robot cleaner 100 by executing at least one instruction stored in the memory 130. In this case, the processor 140 may not only be implemented as one processor 140, but also be implemented as a plurality of processors 140. In the disclosure, the term processor 140 may be used as a meaning that includes a central processing unit (CPU).

The processor 140 may generate a map of a space in which the robot cleaner 100 is located. Then, the processor 140 may store the generated map in the memory 130.

In this case, the processor 140 may generate a map that corresponds to the space in which the robot cleaner 100 is located by using a simultaneous localization and mapping (SLAM) algorithm.

For example, the processor 140 may set a location (e.g., coordinates) at which the robot cleaner 100 begins driving and a rotation angle of the robot cleaner 100 as a reference location and a reference rotation angle, respectively, to generate a map. Then, the processor 140 may use the distance between the robot cleaner 100 and a surrounding object, the rotation angle of the robot cleaner 100, and a moving distance obtained while the robot cleaner 100 drives to generate a map as input for the SLAM algorithm, and obtain the location (e.g., coordinates) and rotation angle (e.g., rotation angle reflected with the location of the robot cleaner 100) of the robot cleaner 100 through the SLAM algorithm. In this case, the processor 140 may obtain the distance between the robot cleaner 100 and the surrounding object through the LiDAR sensor. Then, the processor 140 may calculate the rotation angle of the robot cleaner 100 based on the acceleration of the robot cleaner 100 obtained through the gyro sensor, and calculate the moving distance of the robot cleaner 100 based on the revolutions of wheels obtained through the encoder.

Then, the processor 140 may identify the location (e.g., coordinates) of an obstacle from the reference location to the obtained location based on the distance between the robot cleaner 100 and the surrounding object obtained through the LiDAR sensor while the robot cleaner 100 moves from the reference location to the obtained location.

The processor 140 may perform the above-described process repeatedly while the robot cleaner 100 is moving in a space, and eventually, generate a map that corresponds to the space in which the robot cleaner 100 is located. However, the embodiment is not limited thereto, and the processor 140 may generate a map using various known methods.

Further, the processor 140 may divide the map into a plurality of regions. For example, the processor 140 may generate a Voronoi graph for the map, and divide the map in to a plurality of regions using the Voronoi graph.

Here, the Voronoi graph may be one method for disassembling and displaying a given metric space. Specifically, each line of the Voronoi graph may be lines representing a boundary of sets, that is, when points that are lesser in distance to a specific object than a distance to another object are formed as one set within a metric space in which objects are disposed, the lines represent these sets. That is, the Voronoi graph may be a line connecting points in a middle that are positioned at a same distance with respect to two objects within a given metric space.

In this case, the processor 140 may generate a normal line for the generated Voronoi graph based on the map, and divide the map into a plurality of regions taking into consideration an area of a closed space divided in the map based on the normal line and a length of the normal line. For example, the processor 140 may identify, based on the size of the closed space divided in the map based on the normal line of which the length is within a pre-set range being greater than a pre-set size, the corresponding closed space as one region, and identify a gate that connects the identified region with another region. However, the embodiment is not limited thereto, and the processor 140 may divide the map into a plurality of plurality of regions using various known methods.

The processor 140 may control the driver 110 to drive in a cleaning region included in the map based on information obtained through the sensor 120.

Here, the cleaning region may be each of the regions divided in the map. That is, the robot cleaner 100 may perform cleaning for each region. Specifically, the robot cleaner 100 may perform cleaning while moving in one region, and when the cleaning of the corresponding region is completed, perform cleaning of another region by moving to another region.

Specifically, the processor 140 may use the distance between the robot cleaner 100 and the surrounding object, the rotation angle of the robot cleaner 100, and the moving distance as input for the SLAM algorithm, and obtain the location and rotation angle of the robot cleaner 100 on the map through the SLAM algorithm. Then, the processor 140 may control the driver 110 for the robot cleaner 100 to drive in the cleaning region in the map based on the obtained location and rotation angle of the robot cleaner 100. At this time, the processor 140 may detect obstacles in the surroundings of the robot cleaner 100 based on the map, the location and rotation angle of the robot cleaner 100 on the map, and the distance between the robot cleaner 100 and the surrounding object obtained through the LiDAR sensor.

The processor 140 may control the driver 110 for the robot cleaner 100 to drive in a zigzag pattern in the cleaning region.

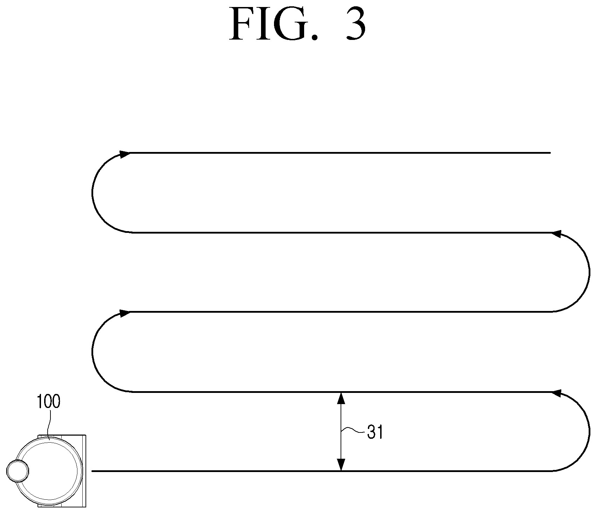

For example, as in FIG. 3, the robot cleaner 100 may move straight in a first direction. Then, the robot cleaner 100 may change, when an obstacle is detected at a front direction of the robot cleaner 100, a driving direction and move straight in a second direction along a route that is spaced apart by a predetermined distance 31 from the route from which the robot cleaner 100 has passed. At this time, the second direction may be a direction opposite from the first direction. Here, the distance 31 by which the routes are spaced apart may be referred to as a cleaning line interval. The robot cleaner 100 may drive in the cleaning region by repeating the zigzag pattern driving.

The processor 140 may identify a type of obstacle located in the cleaning region while the robot cleaner 100 is driving the cleaning region, and control the driving of the robot cleaner 100 based on the type of obstacle.

Specifically, the processor 140 may control the driver 110 to change the driving direction of the robot cleaner 100 from different spaced distances for obstacles of different types.

Here, the obstacles of different types may include an obstacle of a first type and an obstacle of a second type. Specifically, the obstacle of the first type may be a wall, and the obstacle of the second type may be another obstacle which is not a wall, and may include home appliances such as, for example, and without limitation, a television, a refrigerator, an air conditioner, a fan, a computer, an air purifier, and the like, and furniture such as, for example, and without limitation, a bed, a sofa, a chair, a dining table, a desk, a table, a plant, and the like. That is, in a space in which the robot cleaner 100 is located, the obstacle of the second type may include various types of objects that are located in the corresponding space other than the wall.

In this case, the processor 140 may identify the types of obstacles based on the map.

For example, the processor 140 may identify, based on an obstacle detected in the surroundings of the robot cleaner 100 being an obstacle that is greater than a threshold size in the map, the corresponding obstacle as the obstacle of the first type, and identify, based on the obstacle detected from the surroundings of the robot cleaner 100 being an obstacle that is less than or equal to the threshold size in the map, the corresponding obstacle as the obstacle of the second type. Here, the processor 140 may identify the obstacles of the first and second types by identifying whether a size (e.g., width) of the obstacle detected in the surroundings of the robot cleaner 100 is greater than a pre-set width or less than or equal to the pre-set width based on the location of the robot cleaner 100 on the map in that obstacles that are the walls and obstacles other than the walls are identified as obstacles of different types (i.e., first and second types). For example, the pre-set width may be determined based on at least one from among a typical size of an obstacle according to the type on the map, the location of the robot cleaner 100, the distance between the robot cleaner 100 and the obstacle, the size of the obstacle on the map, a value pre-set at a time of manufacture, or a value set (or changed) by a user.

In another example, the processor 140 may identify a type of obstacle by using an image obtained through a camera.

For example, the processor 140 may recognize an object from an image obtained through the camera, and identify whether the obstacle present in the surroundings of the robot cleaner 100 is the obstacle that is the wall or the obstacle other than the wall.

In another example, the processor 140 may identify the type of obstacle based on information obtained through the LiDAR sensor.

Specifically, the processor 140 may calculate a difference between a plurality of distances detected from the LiDAR sensor based on a laser irradiated at different angles. Then, the processor 140 may identify distances of which the calculated difference is within a threshold range and are consecutive to one another from among the plurality of distances. Here, the distances being consecutive may be distances consecutive to one another based on the LiDAR sensor detecting a distance with an object by irradiating a laser while sequentially rotating by a predetermined angle, and, the distances detected, at this time, based on the sequentially irradiated laser may be the distances consecutive to one another.

Then, the processor 140 may identify the type of obstacle by comparing an irradiation angle range of the laser that corresponds to the identified distances with a threshold angle range. Specifically, the processor 140 may identify, based on the irradiation angle range of the laser being greater than the threshold angle range, the obstacle as the obstacle of the first type, and identify, based on the irradiation angle range of the laser being less than or equal to the threshold angle range, the obstacle as the obstacle of the second type. That is, the processor 140 may identify the type of obstacle by comparing the irradiation angle range of the laser with a pre-set angle range. Here, a threshold angle may be determined based on at least one from among the typical size of the obstacle according to the type on the map, the location of the robot cleaner 100, the distance between the robot cleaner 100 and the obstacle, the size of the obstacle on the map, the value pre-set at the time of manufacture, and the value set (or changed) by the user.

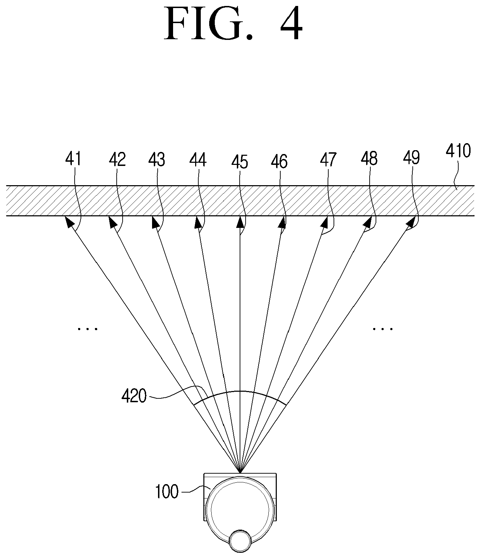

For example, as in FIG. 4, the LiDAR sensor may irradiate a laser at different angles, and detect a plurality of distances 41 to 49 based on the laser reflected from an obstacle 410.

In this case, the plurality of distances 41 to 49 may be distances consecutive to one another. At this time, if a difference between the plurality of distances 41 to 49 is within a threshold range, the processor 140 may identify an angle range 420 at which the laser is irradiated by the LiDAR sensor to detect the plurality of distances 41 to 49, and the angle range 420 may be compared with a threshold angle range. In this case, the processor 140 may identify, based on the angle range 420 being greater than the threshold angle range, the obstacle 410 as the obstacle of the first type.

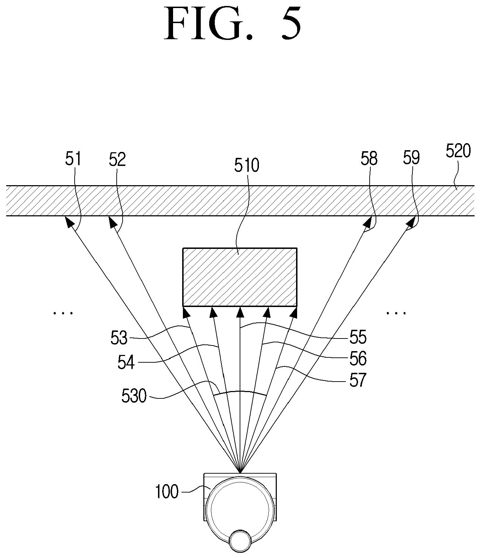

In another example, as in FIG. 5, the LiDAR sensor may irradiate a laser at different angles, and detect a plurality of distances 51 to 59 based on the laser reflected from obstacles 510 and 520.

In this case, the processor 140 may identify the plurality of distances 53 to 57 of which the difference is within the pre-set threshold range and are consecutive to one another from among the plurality of distances 51 to 59. Then, the processor 140 may identify an angle range 530 at which the LiDAR sensor irradiated a laser to detect the plurality of distances 53 to 57, and compare the angle range 530 with the threshold angle range. In this case, the processor 140 may identify, based on the angle range 530 being less than or equal to the threshold angle range, an obstacle 510 as an obstacle of the second type.

That is, if the LiDAR sensor is a 2-dimensional (2D) LiDAR sensor, the processor 140 may identify the type of obstacle through the above-described method because the LiDAR sensor detects an object for a 2D plane from the location installed at the robot cleaner 100, and the comparing the angle range at which the LiDAR sensor irradiated the laser with the threshold angle range may have a same meaning as comparing a width of an object with a pre-set length (i.e., width) based on a detection result of the LiDAR sensor.

Through the methods described above, the processor 140 may identify the type of obstacle. However, the embodiment is not limited thereto, and the processor 140 may identify the type of obstacle using various methods.

Then, the processor 140 may control, based on an obstacle being identified as an obstacle of the first type, the driver 110 for the robot cleaner 100 to change the driving direction from a point that is spaced apart from the obstacle of the first type by a first distance. Specifically, the processor 140 may change the driving direction of the robot cleaner 100 from the point that is spaced apart from the obstacle of the first type by the first distance, and control the driver 110 for the robot cleaner 100 to drive in a zigzag pattern. Here, the first distance may be pre-set at the time of manufacture, or set or changed by the user.

That is, the processor 140 may control, based on an obstacle of the first type being identified from the front direction of the robot cleaner 100 while the robot cleaner 100 is driving in the first direction, the driver 110 to change the driving direction of the robot cleaner 100 to the left side or the right side from the point that is spaced apart from the obstacle by the first distance. Then, the robot cleaner 100 may control the driver 110 to drive in the second direction along a route that is spaced apart from the route driven in the first direction by a predetermined distance. Here, the second direction may be a direction opposite from the first direction.

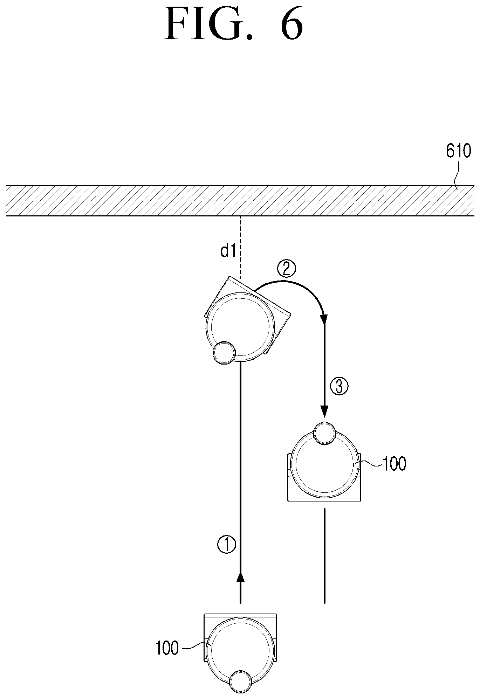

For example, as in FIG. 6, the robot cleaner 100 may drive straight toward an obstacle 610 (① in FIG. 6). At this time, the processor 140 may control, based on the obstacle 610 being an obstacle of the first type, the driver 110 for the robot cleaner 100 to rotate toward a right direction from a point that is spaced apart from the obstacle 610 by d1 (② in FIG. 6). Then, the processor 140 may control the driver 110 for the robot cleaner 100 to move straight in a direction opposite from a previous driving direction along a route that is spaced apart from the route driven by the robot cleaner 100 by a predetermined distance (③ in FIG. 6).

The processor 140 may control, based on an obstacle being identified as an obstacle of the second type, the driver 110 for the robot cleaner 100 to change the driving direction from a point that is spaced apart from the obstacle of the second type by a second distance. Specifically, the processor 140 may change the driving direction of the robot cleaner 100 from the point that is spaced apart from the obstacle of the second type by the second distance, and control the driver 110 for the robot cleaner 100 to rotate about the obstacle of the second type. Here, the second distance may be pre-set at the time of manufacture, or set or changed by the user.

That is, the processor 140 may control, based on an obstacle of the second type being identified from the front direction of the robot cleaner 100 while the robot cleaner 100 is driving in the first direction, the driver 110 to change the driving direction of the robot cleaner 100 to the left side or the right side from the point that is spaced apart from the obstacle by the second distance, and then, the robot cleaner 100 may control the driver 110 to rotate about the obstacle. The processor 140 may control, based on the robot cleaner 100 rotating about the obstacle, the driver 110 for the robot cleaner 100 to rotate about the obstacle such that a distance from the obstacle is within a threshold distance based on the distance from the obstacle obtained through the LiDAR sensor. Here, the threshold distance may be same as the second distance, or less than the second distance. In addition, the threshold distance may be pre-set at the time of manufacture, or set or changed by the user.

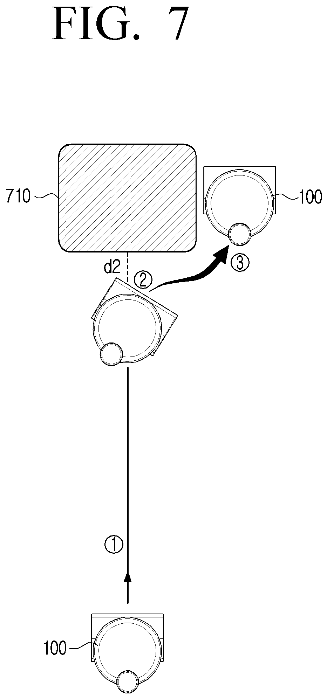

For example, as in FIG. 7, the robot cleaner 100 may drive straight toward an obstacle 710 (① in FIG. 7). At this time, the processor 140 may control, based on the obstacle 710 being an obstacle of the second type, the driver 110 for the robot cleaner 100 to rotate toward the right direction from a point that is spaced apart from the obstacle 710 by d2 (② in FIG. 7). Then, the processor 140 may control the driver 110 for the robot cleaner 100 to rotate about the obstacle 710 (③ in FIG. 7).

From the above-described embodiments, the second distance may be shorter than the first distance. Accordingly, the robot cleaner 100 may perform cleaning driving more closely to the obstacle of the second type than the obstacle of the first type.

When the robot cleaner 100 rotates about an obstacle of the second type, the processor 140 may control the driver 110 for the robot cleaner 100 to rotate about the obstacle of the second type by one rotation.

Then, the processor 140 identifies a size of the obstacle of the second type. Specifically, the processor 140 identifies the size of the obstacle of the second type based on information obtained through the sensor 120 while the robot cleaner 100 rotates about the obstacle of the second type by one rotation.

Here, the size of the obstacle may be a width of the obstacle. Specifically, the width of the obstacle may be a width of the obstacle in a direction perpendicular to a progress direction of the robot cleaner 100 with respect to the obstacle.

Specifically, the processor 140 may set the location and rotation angle of the robot cleaner 100 as an initial location and an initial rotation angle on a map that is obtained by using the SLAM algorithm, prior to the robot cleaner 100 rotating about the obstacle of the second type. Then, the processor 140 may obtain the location and rotation angle of the robot cleaner 100 on the map using the SLAM algorithm while the robot cleaner 100 rotates about the obstacle of the second type, and identify whether the robot cleaner 100 has rotated about the obstacle of the second type by one rotation by comparing the obtained location and rotation angle of the robot cleaner 100 with the initial location and initial rotation angle. For example, the processor 140 may identify, based on the obtained location of the robot cleaner 100 being same as the initial location and the obtained rotation angle of the robot cleaner 100 being same as the initial rotation angle, the robot cleaner 100 as having rotated about the obstacle of the second type by one rotation.

Then, the processor 140 may identify a size of the obstacle based on the obtained location of the robot cleaner 100 using the SLAM algorithm while the robot cleaner 100 rotates about the obstacle of the second type by one rotation.

Specifically, the processor 140 may identify coordinate values having a maximum distance from each other in a direction perpendicular to a direction in the robot cleaner 100 driven prior to rotating about the obstacle of the second type from among the coordinate values of the robot cleaner 100 obtained while the robot cleaner 100 rotates about the obstacle of the second type by one rotation, and identify the distance between the identified coordinate values as the width of the obstacle.

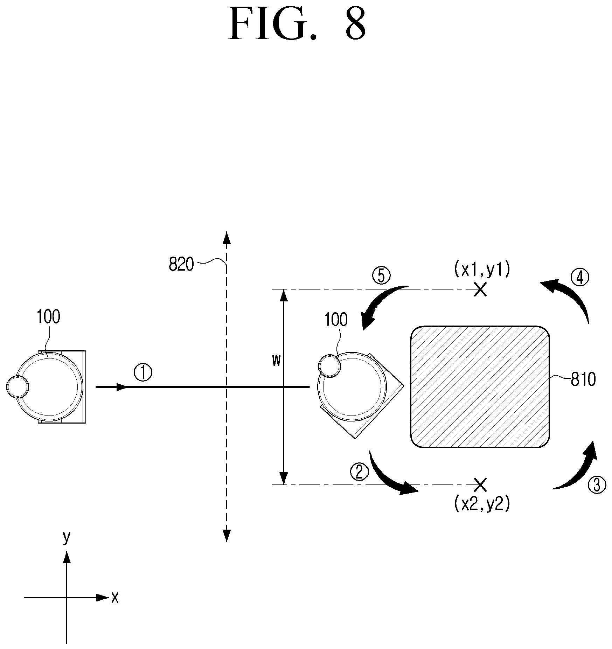

For example, as in FIG. 8, the robot cleaner 100 may move straight toward an obstacle 810 (① in FIG. 8). In this case, the processor 140 may control, based on the obstacle 810 being an obstacle of the second type, the driver 110 for the robot cleaner 100 to rotate about the obstacle 810 by one rotation (②, ③, ④, and ⑤ in FIG. 8). Then, the processor 140 may identify coordinate values of the robot cleaner 100 while the robot cleaner 100 rotates about the obstacle 810 by one rotation, and identify coordinate values (x1,y1), (x2,y2) of which a distance between a direction driven by the robot cleaner 100 toward the obstacle 810 and a direction 820 perpendicular to the driven direction is a maximum value from among the identified coordinate values. Then, the processor 140 may identify a distance w between the coordinate values (x1,y1), (x2,y2) as the width of the obstacle.

Through the method as described above, the processor 140 may identify the size of the obstacle of the second type.

Then, the processor 140 may compare the size of the obstacle of the second type with the threshold size. Here, the threshold size may be determined based on the cleaning line interval. For example, the threshold size may be determined to be a value that is greater than or equal to a value that is two-fold of the cleaning line interval. However, the embodiment is not limited thereto, and the threshold size may be pre-set to various values.

Accordingly, the processor 140 controls, based on the size of the obstacle of the second type being less than the threshold size, the driver 110 for the robot cleaner 100 to drive in a same direction as a previous driving direction after rotating about the obstacle of the second type. Specifically, the processor 140 controls, based on the size of the obstacle of the second type being less than the threshold size, the driver 110 for the robot cleaner 100 to drive in the same direction as the previous driving direction after additionally rotating about the obstacle of the second type by half a rotation.

That is, the processor 140 may control, based on the size of the obstacle of the second type being less than the threshold size, the driver 110 for the robot cleaner 100 that rotated about the obstacle by one rotation to additionally rotate about the obstacle by half a rotation, and to drive along a route that is extended from the route driven by the robot cleaner 100 prior to rotating about the obstacle of the second type.

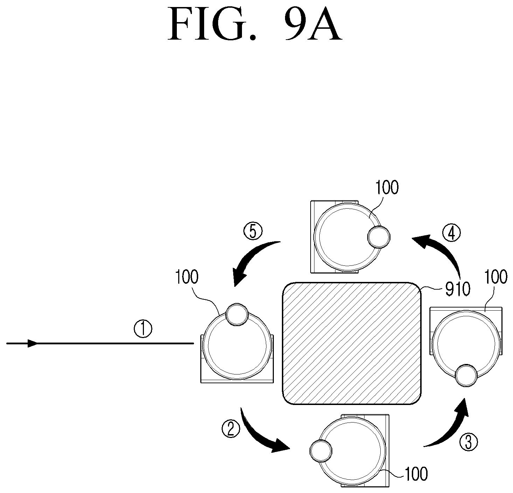

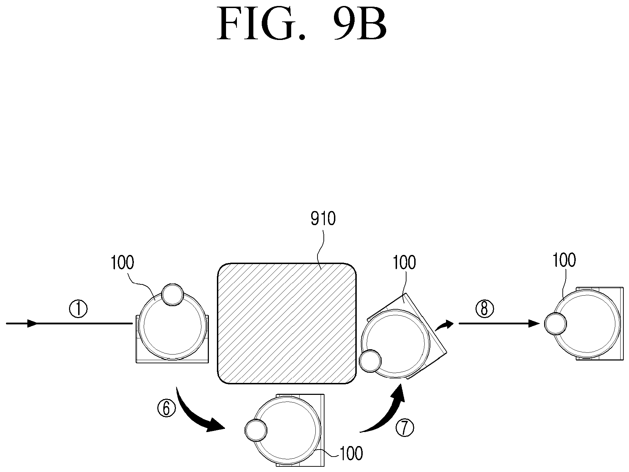

For example, as in FIG. 9A, the robot cleaner 100 may drive straight toward an obstacle 910 (① in FIG. 9). At this time, the processor 140 may control, based on the obstacle 910 being an obstacle of the second type, the driver 110 for the robot cleaner 100 to rotate about the obstacle 910 by one rotation (②, ③, ④, and ⑤ in FIG. 9A).

Then, as in FIG. 9B, the processor 140 may control, based on a size of the obstacle 910 being identified as less than the threshold size, the driver 110 for the robot cleaner 100 to further rotate about the obstacle 910 by half a rotation (⑥ and ⑦ in FIG. 9B). Then, the processor 140 may control the driver 110 to drive in a same direction as the direction driven by the robot cleaner 100 prior to rotating about the obstacle 910 along a route (⑧ in FIG. 9B) that is extended from the route (① in FIG. 9) driven by the robot cleaner 100 prior to rotating about the obstacle 910.

The processor 140 controls, based on the size of the obstacle of the second type being greater than or equal to the threshold size, the driver 110 for the robot cleaner 100 to drive in a zigzag pattern after rotating about the obstacle of the second type. Specifically, the processor 140 controls, based on the size of the obstacle of the second type being greater than or equal to the threshold size, the driver 110 for the robot cleaner 100 to drive in one side region in the zigzag pattern based on the obstacle of the second type.

That is, the processor 140 may control, based on the size of the obstacle of the second type being greater than or equal to the threshold size, the driver 110 for the robot cleaner 100 that rotated about the obstacle by one rotation to drive along a route that is spaced apart from the route driven by the robot cleaner 100 prior to rotating about the obstacle of the second type by a predetermined distance. At this time, the processor 140 may control the driver 110 to drive in a direction opposite from the direction driven by the robot cleaner 100 prior to rotating about the obstacle of the second type. That is, the processor 140 may control the driver 110 for the robot cleaner 100 to drive in the zigzag pattern. In this case, the processor 140 may control the driver 110 for the robot cleaner 100 to drive repeating the zigzag pattern in a region at which the robot cleaner 100 is located based on the obstacle of the second type.

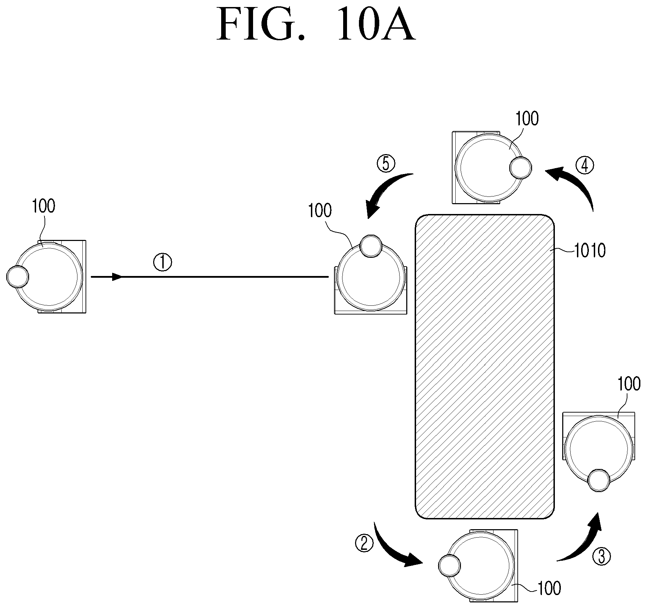

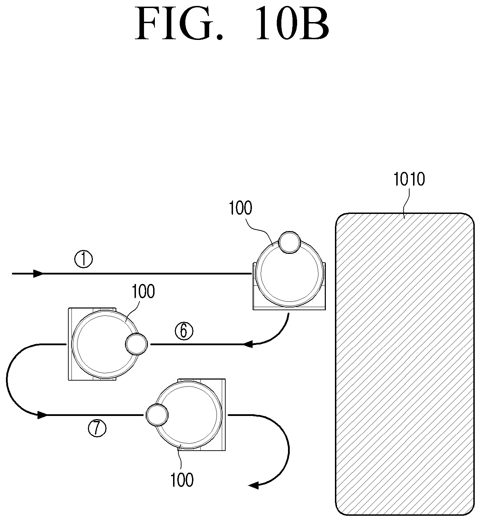

For example, as in FIG. 10A, the robot cleaner 100 may drive straight toward an obstacle 1010 (① in FIG. 10). At this time, the processor 140 may control, based on the obstacle 1010 being an obstacle of the second type, the driver 110 for the robot cleaner 100 to rotate about the obstacle 1010 by one rotation (②, ③, ④, and ⑤ of FIG. 10).

In this case, as in FIG. 10B, the processor 140 may control, based on a size of the obstacle 1010 being identified as greater than or equal to the threshold size, the driver 110 to drive repeating the zigzag pattern in a left region of the obstacle 1010 at which the robot cleaner 100 is located (⑥ and ⑦ in FIG. 10B).

Referring to FIG. 10A, the robot cleaner 100 is shown as moving straight toward an upper part of the obstacle of the second type. That is, in the disclosure, the threshold size may be a value that is greater than two-fold of the cleaning line interval or equal to two-fold of the cleaning line interval. Accordingly, based on the robot cleaner 100 moving straight toward the obstacle of the second type that is greater than or equal to the threshold size while driving in the zigzag pattern, the robot cleaner 100 may drive toward the upper part or a lower part of the obstacle of the second type.

The processor 140 may control, based on a driving of the cleaning region being completed, the driver 110 for the robot cleaner 100 to drive along the obstacle of the first type. Here, the driving of the cleaning region being completed may refer to the robot cleaner 100 completing cleaning by moving within the cleaning region.

Specifically, the processor 140 may control, based on the robot cleaner 100 completing cleaning while moving within the cleaning region using the zigzag pattern, the driver 110 for the robot cleaner 100 to move to a location close with the obstacle of the first type included in the cleaning region based on the location and rotation angle of the robot cleaner 100 on the map obtained by using the SLAM algorithm, and the distance with the surrounding object obtained through the LiDAR sensor. Then, the processor 140 may control, based on the distance with the obstacle of the first type obtained through the LiDAR sensor, the driver 110 for the robot cleaner 100 to drive along the obstacle of the first type such that the distance with the obstacle of the first type is within the threshold distance. Here, the threshold distance may be same as the second distance, or less than the second distance. In addition, the threshold distance may be pre-set at the time of manufacture, or set or changed by the user.

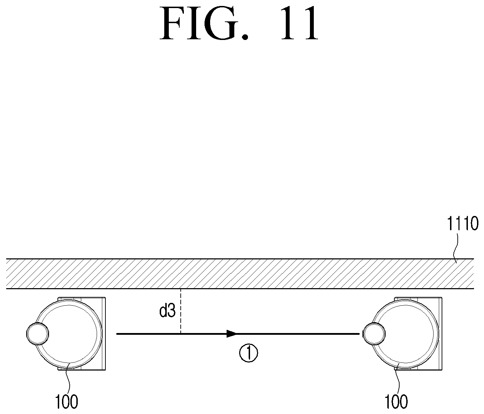

For example, as in FIG. 11, the processor 140 may control, based on the driving of the cleaning region being completed, the driver 110 for the robot cleaner 100 to drive along a route that is spaced apart from an obstacle 1110 by d3 (① in FIG. 11).

As described above, the robot cleaner 100 of the invention may perform, based on the obstacle of the first type being detected while performing cleaning moving in the cleaning region using the zigzag pattern, cleaning while driving in the zigzag pattern by changing the driving direction of the robot cleaner 100 from a point that is spaced apart from the obstacle of the first type by the first distance. That is, the robot cleaner 100 may perform, based on it being the obstacle of the first type, an evasion operation with respect to the obstacle of the first type by changing the driving direction at a point that is spaced apart by some degree without being in close contact.

In addition, the robot cleaner 100 of the invention may perform, based on an obstacle of the second type being detected while cleaning the cleaning region using the zigzag pattern, cleaning by rotating about the obstacle by one rotation in a state that is in close contact with the obstacle by changing the driving direction of the robot cleaner 100 from a point that is spaced apart from the obstacle of the second type by the second distance. Then, the robot cleaner 100 may perform, based on the size of the obstacle, cleaning while maintaining on the previously driven route by further rotating about the obstacle by half a rotation or perform cleaning by driving in one side region of the obstacle in the zigzag pattern. That is, the robot cleaner 100 may perform, based on it being the obstacle of the second type, an evasion operation with respect to the obstacle of the second type by maintaining on the previously driven route or driving in the zigzag pattern after driving in close contact with the obstacle along the obstacle by one rotation.

In addition, the robot cleaner 100 of the invention may perform, based on driving of the cleaning region being completed, that is, based on the cleaning of within the cleaning region being completed, cleaning driving along the obstacle of the first type being in close contact with the obstacle of the first type.

Accordingly, in the invention, a cleaning performance of the floor surface below the wall may be improved while a cleaning speed of the cleaning region is also improved.

In the above-described embodiment, the processor 140 has been described as identifying the obstacle based on information obtained through the LiDAR sensor. However, if the LiDAR sensor is the 2D LiDAR sensor, the LiDAR sensor may not detect an obstacle of a small size in the surroundings of the robot cleaner 100 because the LiDAR sensor detects an object with respect to a 2D plane from the location installed at the robot cleaner 100.

To this end, the sensor 120 may further include at least one from among a 3-dimensional (3D) sensor and a camera. The 3D sensor may be a sensor that can detect a surrounding environment using a stereo camera configured of a plurality of cameras, and may detect a distance between the robot cleaner 100 and a surrounding object. The camera may capture the surroundings of the robot cleaner 100, and obtain at least one image of the surroundings of the robot cleaner 100. In this case, the processor 140 may recognize an object from the image obtained through the camera, and obtain information on a type, a size, and the like of the object that is present in the surroundings of the robot cleaner 100.

Accordingly, the processor 140 may identify an obstacle using at least one from among the 3D sensor and the camera, and control the driver 110 to drive avoiding the identified obstacle.

The processor 140 may also use information on a distance between the robot cleaner 100 and a surrounding object obtained through the 3D sensor to identify a location of the obstacle when generating a map.

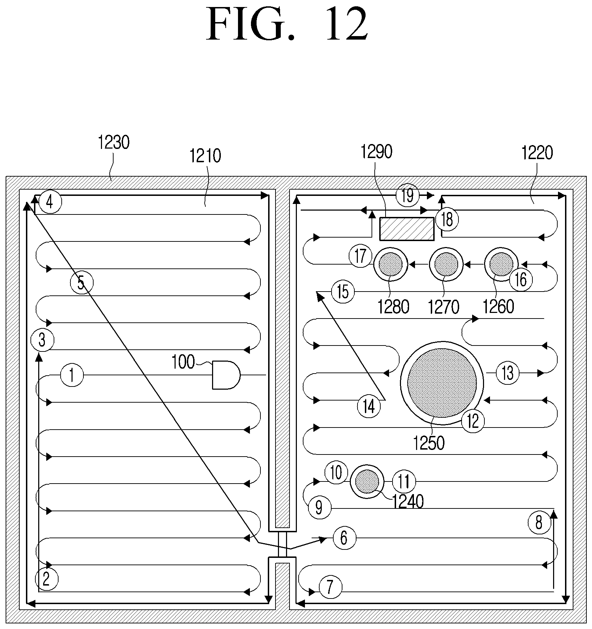

FIG. 12 is a diagram illustrating a driving method of the robot cleaner according to an embodiment of the invention.

Numbers shown in FIG. 12 may represent an order by which the robot cleaner 100 drives in a first region 1210 and a second region 1220.

First, the robot cleaner 100 may drive in the first region 1210 using the zigzag pattern. Specifically, as with (1)→(2), the robot cleaner 100 may perform cleaning while moving in a part of a region in the first region 1210 using the zigzag pattern. Then, the robot cleaner 100 may move to location (3) to clean the remaining region of the first region 1210, and perform cleaning while moving in the remaining region of the first region 1210 using the zigzag pattern.

Here, the robot cleaner 100 may change, while driving in the first region 1210 using the zigzag pattern, the driving direction from a point that is spaced apart from an obstacle 1230 of the first type by the first distance.

Then, the robot cleaner 100 may move, based on cleaning of within the first region 1210 being completed, to location (4) to move along the obstacle 1230 of the first type in the first region 1210. Then, the robot cleaner 100 may move from location (4) to location (5) along the obstacle 1230 of the first type, and perform cleaning while moving in close contact with the obstacle 1230 of the first type.

Then, as with (5)→(6), the robot cleaner 100 may move to the second region 1220.

Then, the robot cleaner 100 may drive in the second region 1220 using the zigzag pattern. Specifically, as with (6)→(7), the robot cleaner 100 may perform cleaning while moving in a part of a region in the second region 1220 using the zigzag pattern. Then, the robot cleaner 100 may move to location (8) to drive in another region of the second region 1220, and perform cleaning while moving using the zigzag pattern as with (8)→(9)→(10).

Then, the robot cleaner 100 may perform, based on an obstacle 1240 of the second type that is less than the threshold size being identified, the evasion operation with respect to the obstacle 1240, perform cleaning of an opposite side of the obstacle 1240 moving straight as with (11)→(12), and perform cleaning while moving again using the zigzag pattern.

Then, the robot cleaner 100 may perform, based on an obstacle 1250 of the second type that is greater than or equal to the threshold size being identified, the evasion operation with respect to the obstacle 1250 as with (13), and perform cleaning while moving in one side region of the obstacle 1250 using the zigzag pattern. Then, the robot cleaner 100 may perform cleaning while moving in an opposite side region of the obstacle 1250 using the zigzag pattern as with (14).

Then, the robot cleaner 100 may move to (15) to drive in another region of the second region 1220, and perform cleaning while moving using the zigzag pattern as with (15)→(16).

Then, the robot cleaner 100 may perform the evasion operation for respective obstacles of the second type 1260, 1270, and 1280 that are greater than or equal to the threshold size, perform cleaning while moving straight in the opposite side of the obstacle 1280 as with (17), and perform cleaning while moving again using the zigzag pattern.

Then, the robot cleaner 100 may drive, based on an obstacle 1290 being detected using at least one from among the 3D sensor and the camera, avoiding the obstacle 1290.

Then, the robot cleaner 100 may move, based on the cleaning of within the second region 1220 being completed, in a vicinity of the obstacle 1230 of the first type as with (18) to move along the obstacle 1230 of the first type in the second region 1220, and perform cleaning while moving in close contact with the obstacle 1230 of the first type along the obstacle 1230 of the first type as with (18)→(19).

In the above-described embodiment, based on the size of the obstacle of the second type being less than the threshold size, the robot cleaner 100 has been described as additionally rotating about the obstacle by half a rotation. However, the embodiment is not limited to this example, and the distance which the robot cleaner 100 additionally rotates about the obstacle may be determined such that the robot cleaner 100 can maintain the driven route prior to rotating about the obstacle after the robot cleaner 100 additionally rotated about the obstacle. That is, the processor 140 may control, based on the robot cleaner 100 driving in the opposite side of the obstacle after having additionally rotated about the obstacle, the driver 110 for the robot cleaner 100 to additionally rotate about the obstacle such that a route of driving in the opposite side of the obstacle may become a route extended from the route driven by the robot cleaner 100 prior to rotating about the obstacle.

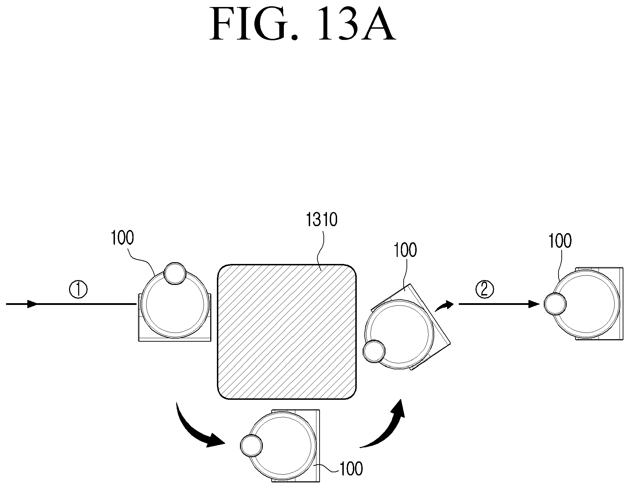

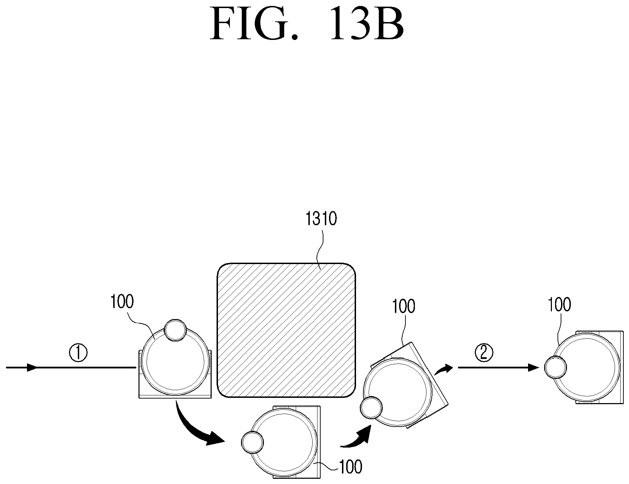

For example, as in FIG. 13A, the processor 140 may control the driver 110 for the robot cleaner 100 to rotate about an obstacle 1310 by more than half a rotation. In another example, as in FIG. 13B, the processor 140 may control the driver 110 for the robot cleaner 100 to rotate about the obstacle 1310 by less than half a rotation.

As described above, the processor 140 may control the driver 110 for the robot cleaner 100 to additionally rotated about the obstacle 1310 such that the robot cleaner 100 that rotated about the obstacle 1310 can drive while maintaining the previously driven route.

In the above-described embodiment, when the size of the obstacle of the second type is less than the threshold size, the robot cleaner 100 has been described as additionally rotating about the obstacle by half a rotation, and driving in the opposite side of the obstacle along a route that is extended from the previously driven route. However, the embodiment is not limited to the example, and the processor 140 may control the driver 110 for the robot cleaner 100 to drive in the opposite side of the obstacle in the same direction as the previous driving direction from the location at which the obstacle was rotated about by half a rotation, and not the route extended from the previously driven route.

When the robot cleaner performs cleaning rotating about an obstacle, an uncleaned region may be generated. Here, the uncleaned region may refer to a region that is not cleaned by the cleaning device of the robot cleaner.

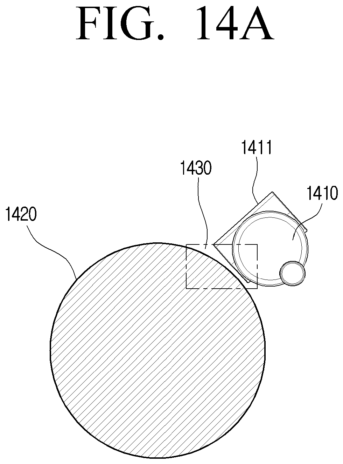

For example, as in FIG. 14A, based on a cleaning device 1411 being located at a front of a robot cleaner 1410, and the robot cleaner 1410 rotating about a circular obstacle 1420, an uncleaned region 1430 in which cleaning is not performed because the cleaning device is not capable of contacting may be generated.

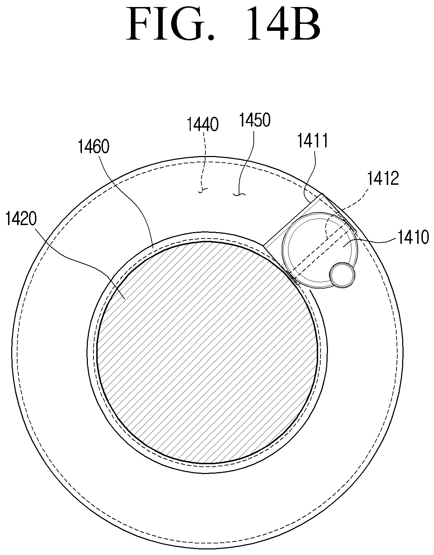

Specifically, as in FIG. 14B, based on the robot cleaner 1410 with a cleaning device 1412 located at a center part rotating about the circular obstacle 1420, a region being cleaned by the cleaning device 1412, that is, the floor surface on which the cleaning device 1412 passes may be represented as a region 1440 (i.e., region marked with dotted lines). Based on the robot cleaner 1410 with the cleaning device 1411 located at a front part rotating about the circular obstacle 1420, the region being cleaned by the cleaning device 1411, that is, the floor surface on which the cleaning device 1411 passes may be represented as a region 1450 (i.e., region marked with a solid line).

As described above, based on the cleaning device being located at the center part rather than the front part of the robot cleaner, the cleaning device may be relatively closer to a rotary shaft of the wheels of the robot cleaner, and accordingly, the cleaning device may be relatively more in contact with the obstacle when the robot cleaner rotates about the obstacle. Accordingly, when the cleaning device is located at the front part of the robot cleaner, an uncleaned region in which cleaning is not performed by the cleaning device may be generated compared to when the cleaning device is located at the center part. For example, in FIG. 14B, an uncleaned region 1460 may be generated.

In FIG. 14A and FIG. 14B, the cleaning device being positioned at the front of the robot cleaner 1410 has been shown, but an uncleaned region may be generated even when the cleaning device is located at a back of the robot cleaner 1410.

As described above, the robot cleaner 100 of the invention may perform a reverse operation when rotating about an obstacle to solve a problem of foreign material being left as is near the obstacle despite the robot cleaner having performed cleaning with respect to the obstacle.

Specifically, the processor 140 may control, based on the robot cleaner 100 moving by the threshold distance while rotating about an obstacle of the second type by one rotation, the driver 110 for the robot cleaner 100 to return again to its original location after having it reversed by a predetermined distance and for the robot cleaner 100 to move from the returned location.

Here, the robot cleaner 100 moving by the threshold distance may refer to the robot cleaner 100 being rotated by a predetermined angle when the robot cleaner 100 rotates about the circular obstacle. In this case, the angle by which the robot cleaner 100 rotates about the obstacle may be pre-set at the time of manufacture, or set or changed by the user.

Specifically, the processor 140 may control the robot cleaner 100 to perform cleaning while rotating about the obstacle of the second type by one rotation. At this time, the processor 140 may obtain the location and rotation angle of the robot cleaner 100 using SLAM while the robot cleaner 100 rotates about the obstacle, stop a rotation operation when the robot cleaner 100 is identified as having been rotated by a predetermined angle based on the obtained rotation angle, and control the driver 110 for the robot cleaner 100 to reverse by the predetermined distance. Here, the distance by which the robot cleaner 100 reverses may be determined based on at least one from among the distance between the robot cleaner 100 and the obstacle, the size of the obstacle, the value pre-set at the time of manufacture or the value set (or changed) by the user.

Then, the processor 140 may control the driver 110 for the robot cleaner 100 to move to a location at which reversing is started based on the obtained location of the robot cleaner and the distance with the obstacle obtained through the LiDAR sensor. Then, the processor 140 may control the driver 110 for the robot cleaner 100 to rotate about the obstacle again from the location at which reversing is started. In this case, the processor 140 may repeatedly perform the above-described operation each time the robot cleaner 100 rotates about the obstacle by the predetermined distance.

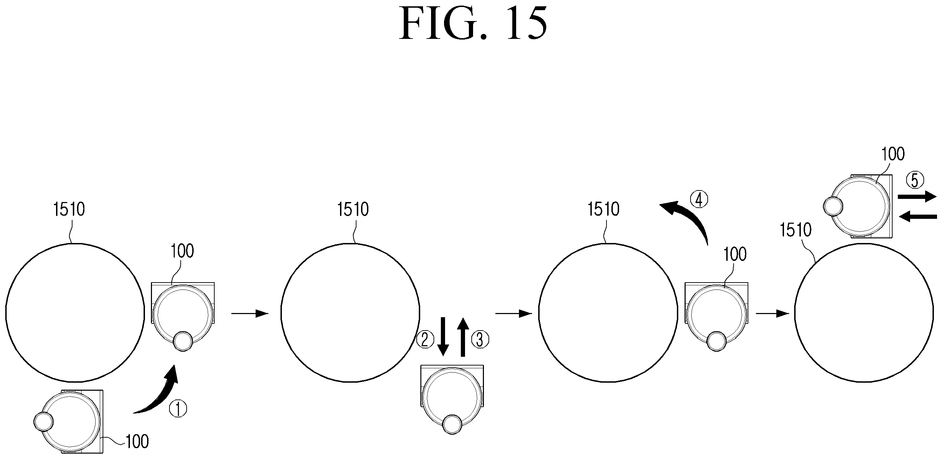

For example, as in FIG. 15, the robot cleaner 100 may rotate about an obstacle 1510. At this time, the processor 140 may control the driver 110 for the robot cleaner 100 to stop the rotation operation when the rotating about the obstacle 1510 by the predetermined distance (① in FIG. 15), and control the driver 110 for the robot cleaner 100 to move again to its original location after having reversed by the predetermined distance (② and ③ in FIG. 15).

Then, the processor 140 may control the driver 110 for the robot cleaner 100 that returned to its original location to rotate about the obstacle 1510 again (④ in FIG. 15). Then, the processor 140 may control the driver 110 for the robot cleaner 100 to stop the rotation operation when having rotated about the obstacle 1510 by the predetermined distance, and for the robot cleaner 100 to move again to its original location after having reversed by the predetermined distance again (⑤ in FIG. 15). Eventually, the processor 140 may control for the robot cleaner 100 to perform cleaning while rotating about the obstacle 1510, repeatedly performing the reverse operation and a return to original location operation, every time the robot cleaner 100 rotates about the obstacle 1510 by the predetermined distance.

As described above, based on the robot cleaner 100 performing the reverse operation when rotating about the obstacle, the uncleaned region may be reduced.

For example, a radius of the circular obstacle may be smaller than or equal to a radius of the robot cleaner 100.

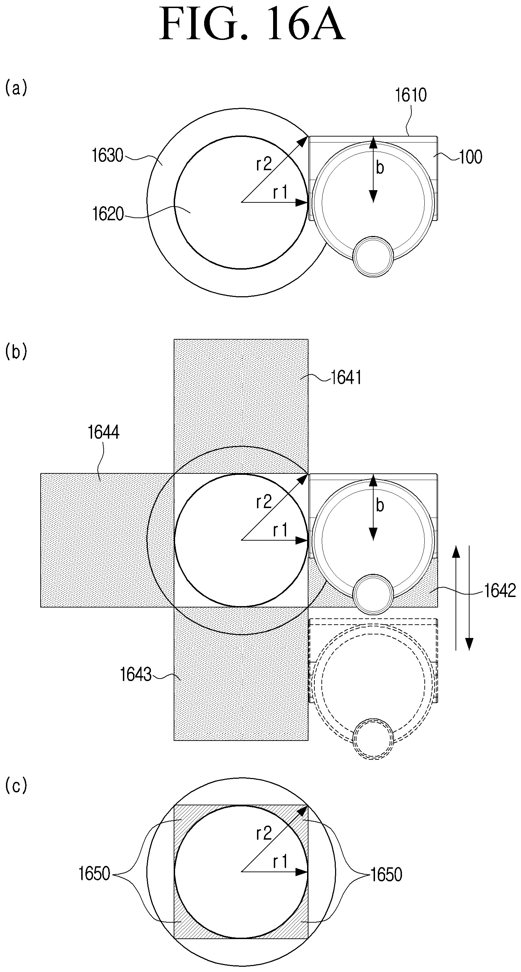

Here, as with (a) in FIG. 16A, a size of an uncleaned region 1630 that is generated when the robot cleaner 100 with a cleaning device 1610 located at the front part does not perform the reverse operation and rotates about a circular obstacle 1620 may be represented as × *r*₂²-π× r₁². Here, r₁ may be a radius of the obstacle 1620, and r₂ may be a radius of an outer circle of the uncleaned region 1630.

At this time, if radius r₁ of the obstacle 1620 is smaller than or equal to radius b of the robot cleaner 100, four regions 1641, 1642, 1643, and 1644 may be cleaned as with (b) of FIG. 16A when the robot cleaner 100 performs, for example, the reverse operation every time the obstacle 1620 is rotated about by 90 degrees. Accordingly, as with (c) in FIG. 16A, a size of an uncleaned region 1650 may be represented as (2× *r*₁)²-π× *r*₁² when the reverse operation is performed.

As described above, when the robot cleaner performs the reverse operation, the uncleaned region may be reduced by π× r₂²-(2×*r*₁)².

In another example, the radius of the circular obstacle may be greater than the radius of the robot cleaner 100.

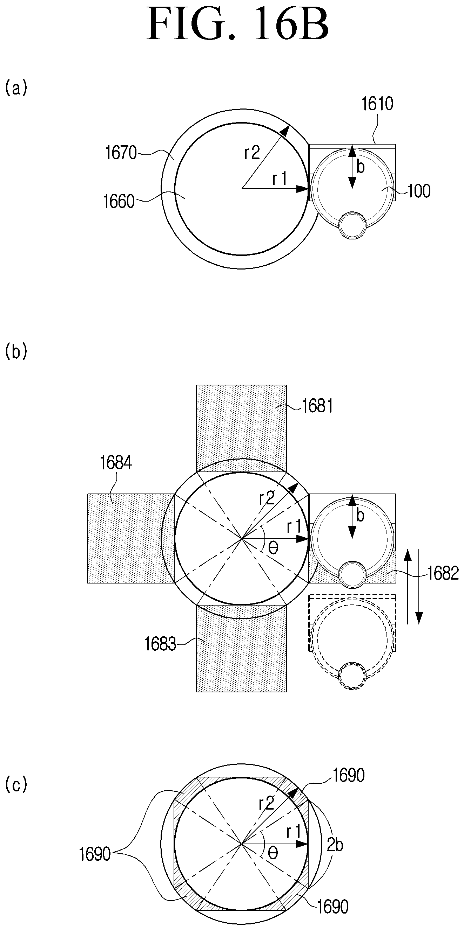

As with (a) in FIG. 16B, a size of an uncleaned region 1670 that is generated when the robot cleaner 100 with the cleaning device 1610 located at the front part does not perform the reverse operation and rotates about a circular obstacle 1660 may be represented as π× *r*₂²-π× *r*₁². Here, r₁ may be a radius of the obstacle 1660, and r₂ may be a radius of an outer circle of the uncleaned region 1670.

At this time, if radius r₁ of the obstacle 1660 is greater than radius b of the robot cleaner 100, four regions 1681, 1682, 1683, and 1684 may be cleaned as with (b) of FIG. 16B when the robot cleaner 100 performs, for example, the reverse operation every time the obstacle 1620 is rotated about by 90 degrees. Accordingly, as with (c) in FIG. 16B, a size of an uncleaned region 1690 may be represented as (π×*r*₂²-π× *r*₁²)-*n*×((π× *r*₂²×θ/(2×π))-*b*× *r*₁) when the reverse operation is performed. Here, n may refer to a number of times reversing is performed when the robot cleaner 100 rotates about the obstacle, and for example, in the above-described example, n may be 4 based on the robot cleaner 100 performing the reverse operation every time the obstacle 1620 is rotated about by 90 degrees. Then, it may be θ=2×arctan(*r*₁/*b*). From this aspect, based on the radius of the obstacle being greater than the radius of the robot cleaner 100, an optimal number of times nₒ of which the reverse operation is performed according to the obstacle size may be *nₒ*=(2×π)/θ, and at this time, an angle θₒ at which the robot cleaner 100 rotates about the obstacle for the reverse operation may be same as θₒ=(2×π)/ *nₒ.*

As described above, based on the robot cleaner 100 performing the reverse operation, the uncleaned region may be reduced by (π× *r*₂²-π× *r*₁²)-((*π*× *r*₂²-π× *r*₁²)-*n*×((π× *r*₂²×0/(2*×π*))-*b*× *r*₁)).

In FIG. 16A and FIG. 16B, the robot cleaner 100 has been described as performing four reverse operations while rotating about the obstacle. However, the embodiment is not limited to the example, and the robot cleaner 100 may perform at least two reverse operations while rotating about the obstacle. In addition, the robot cleaner 100 may perform the reverse operation not only along the circular obstacle, but also when rotating along an obstacle of various shapes such as a quadrangle type.

As described above, the robot cleaner 100 may drive in each region. In this case, the processor 140 may set a division line at a gate of a region for the robot cleaner 100 to drive in each region, and control the driver 110 for the robot cleaner 100 to drive in a region that is defined based on the division line. At this time, the division line may be set at different locations of the gate according to the region in which the robot cleaner 100 is located in the invention.

Specifically, the plurality of regions in the map may include a first region and a second region, and the first region and the second region which are adjacent to each other may be connected through the gate.

In this case, the processor 140 may control, based on the cleaning region being the first region, the driver 110 for the robot cleaner 100 to drive in the first region based on a first division line set at the gate, and control, based on the cleaning region being the second region, the driver 110 for the robot cleaner 100 to drive in the second region based on a second division line set at the gate. Here, the first division line and the second division line may be set at different locations within the gate.

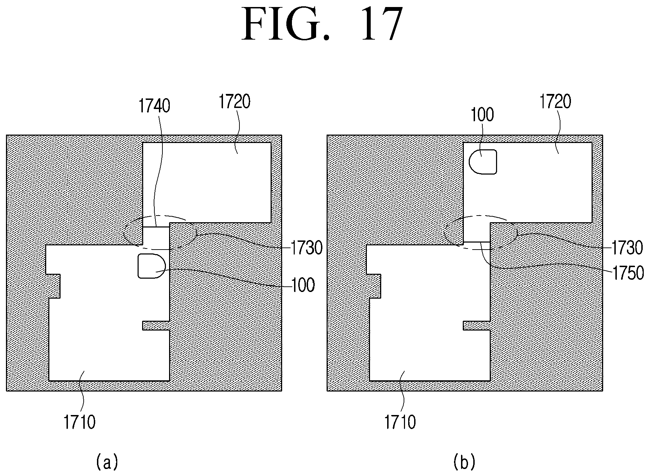

For example, as in FIG. 17, a first region 1710 and a second region 1720 may be connected through a gate 1730.

The processor 140 may identify the location of the robot cleaner 100 on the map using the SLAM algorithm.

At this time, as with (a) in FIG. 17, the processor 140 may set, based on the robot cleaner 100 being located in the first region 1710, a division line 1740 at a location that is adjacent to the second region 1720 than the first region 1710 from the gate 1730, and control the robot cleaner 100 to perform cleaning while moving in the first region 1710 that is defined based on the division line 1740.

In addition, as with (b) in FIG. 17, the processor 140 may set, based on the robot cleaner 100 being located in the second region 1720, a division line 1750 at a location adjacent to the first region 1710 than the second region 1720 from the gate 1730, and control the robot cleaner 100 to perform cleaning while moving in the second region 1720 that is defined based on the division line 1750.

As described above, in the invention, an uncleaned region from the gate being generated may be prevented based on the division line for the dividing of regions being set according to the location of the robot cleaner 100.

In the above-described example, the processor 140 has been described as generating a map of a space in which the robot cleaner 100 is located, and dividing the map into a plurality of regions. However, the embodiment is not limited to the example, and the processor 140 may divide, during a process of generating a map, a region in the map. That is, the processor 140 may identify a region through the above-described method even when only a part of a map is generated, and not when a whole map is generated. Then, when a region is identified as described above, the processor 140 may control for the robot cleaner 100 to perform cleaning of the region.

In the above-described example, the robot cleaner 100 has been described as performing cleaning for each region. However, the embodiment is not limited to the example, and the robot cleaner 100 may perform cleaning while moving throughout the whole of the map. That is, the cleaning region may be the whole of the map.

As described above, the robot cleaner 100 may perform cleaning of the cleaning region by performing the operation of rotating about the obstacle of the second type by one rotation, the operation of moving along the obstacle of the first type, and the like, when driving in the cleaning region. In addition, the robot cleaner 100 may drive along routes that are spaced apart by a predetermined interval (e.g., 31 in FIG. 3) when driving in the zigzag pattern.

Here, an operation performed by the robot cleaner 100 when driving in the cleaning region, an interval when performing the zigzag pattern, and the like, may be set according to a user command.

In this case, the user command may be, for example, input to an electronic device 1900 connected to the robot cleaner 100 through a server 1800 as in FIG, 18. Here, the electronic device 1900 may be implemented as a smartphone, a tablet, a wearable device, and the like.

To this end, the robot cleaner 100 may perform communication with the server 1800. For example, the robot cleaner 100 may perform communication with the server 1800 using Wi-Fi communication.

The server 1800 may control and manage various devices (e.g., home appliances, Internet of Things (IoT) devices, etc.) registered in the server 1800. At this time, the server 1800 may register devices for each user account.

Specifically, the electronic device 1900 may download an application from a server (not shown) providing the application and install the downloaded application. In this case, the user may execute the application and input a user account in the electronic device 1900, log-in to the server 1800 through the input user account, and register the robot cleaner 100.

When the robot cleaner 100 is registered to the user account, the server 1800 may transmit data associated with the robot cleaner 100 to the electronic device 1900 that performs communication with the server 1800 based on the registered user account, and transmit a control signal for controlling the robot cleaner 100 to the robot cleaner 100 according to the user command input in the electronic device 1900. In this case, the user may execute the application installed in the electronic device 1900, and input the user command for controlling the robot cleaner 100 through the application.

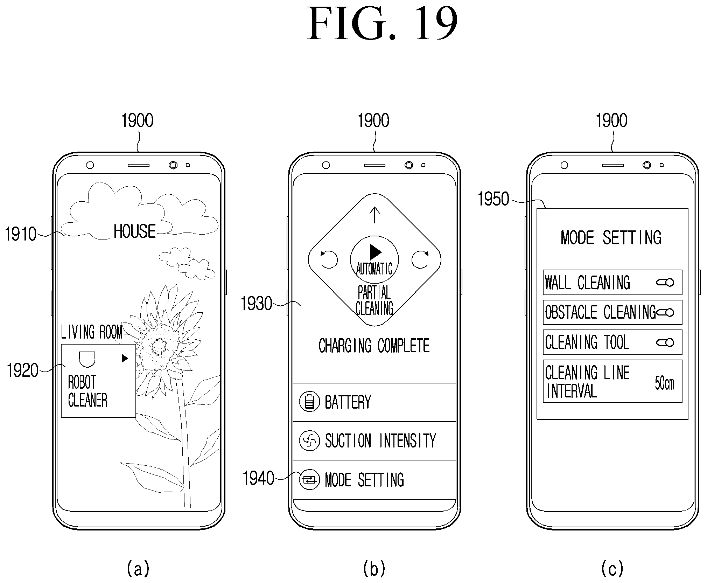

For example, as with (a) in FIG. 19, when the application is executed in the electronic device 1900, an execution screen 1910 of the application may be displayed in the electronic device 1900. Then, the electronic device 1900 may display, based on a graphical user interface (GUI) 1920 corresponding to the robot cleaner 100 being selected in the execution screen 1910, a user interface 1930 for controlling the robot cleaner 100 as with (b) in FIG. 19. Then, the electronic device 1900 may display, based on a GUI 1940 for setting a mode of the robot cleaner 100 being selected in the user interface 1930, a user interface 1950 for setting the mode of the robot cleaner 100 as with (c) in FIG. 19.

Accordingly, the user may set whether the robot cleaner 100 is to perform a wall cleaning and an obstacle cleaning through the user interface 1950, and set whether to operate a cleaning tool of the robot cleaner 100. In addition, the user may set the cleaning line interval, through the user interface 1950, when driving in the zigzag pattern.

In this case, the electronic device 1900 may transmit the user command input through the user interface 1950 to the server 1800, and the server 1800 may transmit the control signal for controlling the robot cleaner 100 to the robot cleaner 100 according to the user command. In this case, the processor 140 may control an operation of the robot cleaner 100 based on the control signal received from the server 1800.

Here, the wall cleaning may refer to performing cleaning while driving along the obstacle of the first type after cleaning of the cleaning region is completed. Accordingly, the processor 140 may control, based on the robot cleaner 100 being set to perform the wall cleaning, the robot cleaner 100 to perform cleaning while driving along the obstacle of the first type. In addition, the processor 140 may control, based on the robot cleaner 100 being set so as to not perform the wall cleaning, the robot cleaner 100 to perform cleaning for only within the cleaning region.

In addition, the obstacle cleaning may refer to performing cleaning while rotating about the obstacle of the second type by one rotation. Accordingly, the processor may 140 control, based on the robot cleaner 100 being set to perform the obstacle cleaning, the robot cleaner 100 to perform cleaning while rotating about the obstacle of the second type. In addition, the processor 140 may control, based on the robot cleaner 100 being set so as to not perform the obstacle cleaning, the robot cleaner 100 to perform the evasion operation with respect to the obstacle of the second type without rotating about the obstacle of the second type by one rotation. For example, the processor 140 may control the robot cleaner 100 to drive in the opposite side of the obstacle after rotating only half a rotation and not rotating about the obstacle by one rotation, or control the robot cleaner 100 to drive in one side region of the obstacle using the zigzag pattern and not rotate about the obstacle by one rotation.

In addition, the processor 140 may adjust, when the robot cleaner 100 is driving in the zigzag pattern, an interval between the routes driven by the robot cleaner 100 based on the cleaning line interval set based on the user command.

As described above, in the invention, a cleaning efficiency of the robot cleaner 100 may be further enhanced based on being able to set various cleaning operations of the robot cleaner 100 according to the user command.

In addition, the processor 140 may control, based on the robot cleaner 100 being set to operate the cleaning device (i.e., cleaning tool), the robot cleaner 100 to perform cleaning while moving in the cleaning region. Then, the processor 140 may control, based on the robot cleaner 100 being set so as to not operate the cleaning device, the robot cleaner 100 to move in the cleaning region and not operate the cleaning device.

In this case, the user may set, when the robot cleaner 100 is driving in a space to generate a map, the robot cleaner 100 so as to not operate the cleaning device. Accordingly, efficiency of the robot cleaner 100 may be increased from an electrical power aspect.

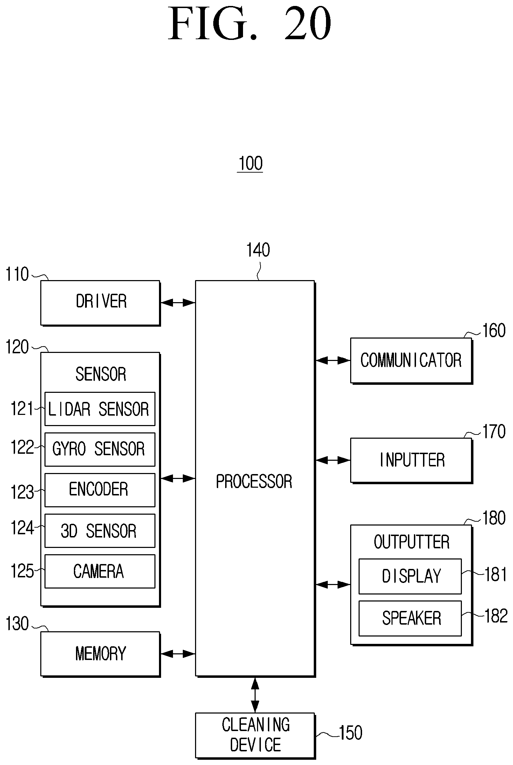

FIG. 20 is a block diagram illustrating a detailed configuration of the robot cleaner according to an embodiment of the invention.

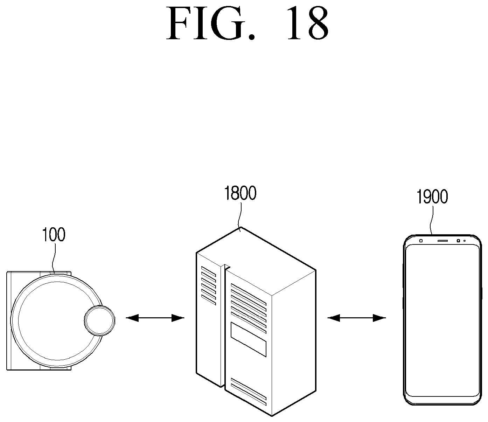

As shown in FIG. 20, the robot cleaner 100 may include not only the driver 110, the sensor 120, the memory 130, and the processor 140, but also further include a cleaning device 150, a communicator 160, an inputter 170, an outputter 180, and the like. However, the configurations described above are merely examples, and a new configuration may be added to or some configurations may be omitted from the configurations described in the above in realizing the invention. In describing FIG. 20, descriptions that overlap with those in FIG. 1 to FIG. 19 will be omitted.

The sensor 120 may include the LiDAR sensor 121, a gyro sensor 122, an encoder 123, a 3-dimensional (3D) sensor 124, and a camera 125.

The LiDAR sensor 121 may detect a distance between the robot cleaner 100 and the surrounding object by irradiating a laser while rotating 360 degrees, and provide the detected information to the processor 140. The gyro sensor 122 may detect an acceleration of the robot cleaner 100, and provide the detected information to the processor 140. The encoder 123 may detect revolutions of wheels installed respectively at the left side and the right side of the main body of the robot cleaner 100, and provide the detected information to the processor 140. The 3D sensor 124 may detect a distance between the robot cleaner 100 and the surrounding object, and provide the detected information to the processor 140. The camera may obtain at least one image of the surroundings of the robot cleaner 100 by capturing the surroundings of the robot cleaner 100, and provide the obtained image to the processor 140.

The cleaning device 150 may suction a foreign material. To this end, the cleaning device 150 may include a brush, a motor, a dust container, and the like. Specifically, the processor 140 may rotate the brush for collecting the foreign material and generate a suction force through the motor, and the like, and suction foreign material from the floor surface on which the robot cleaner 100 drives. As described above, the processor 140 may control the cleaning device 150 for the robot cleaner 100 to perform the cleaning operation while moving in the cleaning region. At this time, the suctioned foreign material may be contained in the dust container. In addition, according to an embodiment, the cleaning device 150 may further include a mopping cloth.

The communicator 160 may include circuity, and perform communication with an external device. The processor 140 may receive various data or information from the external device connected through the communicator 160, and transmit various data or information to the external device.

Specifically, the processor 140 may transmit data associated with the robot cleaner 100 to the server 1800 through the communicator 160. Then, the processor 140 may control, based on a control signal for controlling the robot cleaner 100 being received from the server 1800 through the communicator 160, an operation of the robot cleaner 100 based on the received control signal. For example, the processor 140 may control an operation (e.g., the wall cleaning, the obstacle cleaning, whether to operate the cleaning tool, etc.) that is performed by the robot cleaner 100 when driving in the cleaning region, and adjust the interval when driving in the zigzag pattern.

The inputter 170 may include circuity, and receive input of the user command for setting or selecting various functions supported in the robot cleaner 100. To this end, the inputter 170 may include a plurality of buttons, and may be implemented as a touch screen which can perform a function of the display 181 simultaneously.

In this case, the processor 140 may control an operation of the robot cleaner 100 based on the user command input through the inputter 170. For example, the processor 140 may control the robot cleaner 100 based on an on/off command of the robot cleaner 100, an on/off command of a function of the robot cleaner, and the like, input through the inputter 170 of the robot cleaner 100. In addition to the above, the processor 140 may control an operation (e.g., the wall cleaning, the obstacle cleaning, whether to operate the cleaning tool, etc.) that is performed by the robot cleaner 100 when driving in the cleaning region based on the user command input through the inputter 170, and adjust the interval when driving in the zigzag pattern.

The outputter 180 may include a display 181 and a speaker 182.

The display 181 may display various information. To this end, the display 181 may be implemented as a liquid crystal display (LCD), and the like, and may be implemented as a touch screen which can perform a function of the inputter 170 simultaneously.

Specifically, the processor 140 may display information (e.g., information such as, for example, and without limitation, progress time of cleaning, current cleaning mode (i.e., suction intensity), battery information, whether or not to charge, whether the dust container is full of dust, error state, etc.) associated with an operation of the robot cleaner 100 in the display 181.

The speaker 182 may output audio. Specifically, the processor 140 may output various notification sounds or voice guide messages associated with an operation of the robot cleaner 100 through the speaker 182.

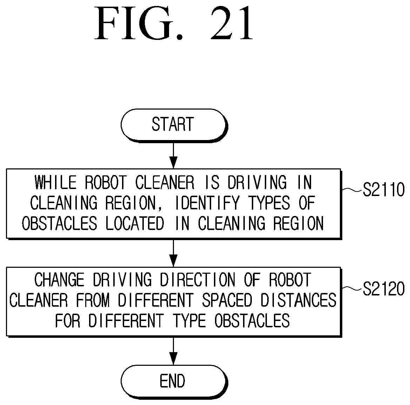

FIG. 21 is a flowchart illustrating a controlling method of a robot cleaner according to an embodiment of the invention.

While driving in the cleaning region included in the map based on information obtained through the sensor of the robot cleaner, the types of obstacles located in the cleaning region may be identified (S2110).

Then, while driving in the cleaning region, the driving direction from different spaced distances may be changed for different type obstacles (S2120).

Specifically, in step S2120, when the obstacle is identified as the obstacle of the first type, the driving direction may be changed from a point that is spaced apart from the obstacle of the first type by the first distance, and when the obstacle is identified as an obstacle of the second type, the driving direction may be changed from a point that is spaced apart from the obstacle of the second type by the second distance. Here, the second distance may be shorter than the first distance.

In addition, in step S2120, driving may be performed in the zigzag pattern by changing the driving direction from the point that is spaced apart from the obstacle of the first type by the first distance, and the obstacle of the second type may be rotated by changing the driving direction from the point that is spaced apart from the obstacle of the second type by the second distance.

In this case, based on a size of the obstacle of the second type being identified and the size of the obstacle of the second type being less than the threshold size, driving may be performed in the same direction as the previous driving direction after rotating about the obstacle of the second type, and based on the size of the obstacle of the second type being greater than or equal to the threshold size, driving may be performed in the zigzag pattern after rotating about the obstacle of the second type.

Specifically, the size of the obstacle of the second type may be identified based on information obtained through the sensor while rotating about the obstacle of the second type by one rotation, and based on the size of the obstacle of the second type being less than the threshold size, driving may be performed in the same direction as the previous driving direction after additionally rotating about the obstacle of the second type by half a rotation, and based on the size of the obstacle of the second type being greater than or equal to the threshold size, driving may be performed in one side region with respect to the obstacle of the second type in the zigzag pattern.

Then, when having moved by the threshold distance while rotating about the obstacle of the second type by one rotation, return again to its original location after having reversed by the predetermined distance, and move again from the returned location.

In addition, when driving of the cleaning region is completed, driving may be performed along the obstacle of the first type.

The map may be divided into a plurality of regions, and the plurality of regions may include the first and second regions which are connected through the gate. Here, if the cleaning region is the first region, the first region may be driven based on the first division line set at the gate, and if the cleaning region is the second region, the second region may be driven based on the second division line set at the gate. At this time, the first division line and the second division line may be set at different locations within the gate.

The driving method of the robot cleaner as described above has been described in detail in FIG. 1 to FIG. 20.

According to an embodiment, a method according to the various embodiments described in the invention may be provided included a computer program product. The computer program product may be exchanged between a seller and a purchaser as a commodity. The computer program product may be distributed in the form of a machine-readable storage medium (e.g., a compact disc read only memory (CD-ROM)), or distributed online through an application store (e.g., PLAYSTORE^{™}) or directly between two user devices (e.g., smartphones). In the case of online distribution, at least a portion of the computer program product (e.g., downloadable app) may be at least stored temporarily in a server of a manufacturer, a server of an application store, or a machine-readable storage medium such as a memory of a relay server, or temporarily generated.

Each of the elements (e.g., a module or a program) according to the various embodiments of the invention as described in the above may be formed as a single entity or a plurality of entities, and some sub-elements of the above-mentioned sub-elements may be omitted, or other sub-elements may be further included in the various embodiments. Alternatively or additionally, some elements (e.g., modules or programs) may be integrated into one entity to perform the same or similar functions performed by the respective elements prior to integration.

Operations performed by a module, a program, or another element, in accordance with various embodiments, may be executed sequentially, in a parallel, repetitively, or in a heuristic manner, or at least some operations may be executed in a different order, omitted or a different operation may be added.

The term "part" or "module" used in the disclosure may include a unit configured as a hardware, software, or firmware, and may be used interchangeably with terms such as, for example, and without limitation, logic, logic blocks, components, circuits, or the like. "Part" or "module" may be a component integrally formed or a minimum unit or a part of the component performing one or more functions. For example, a module may be configured as an application-specific integrated circuit (ASIC).

The various embodiments of the disclosure may be implemented with a software that includes instructions stored in a machine-readable storage media (e.g., computer). The machine may call an instruction stored in the storage medium, and as a device operable according to the called instruction, may include an electronic device (e.g., robot cleaner 100) according to the above-mentioned embodiments.

Based on the instruction being executed by the processor, the processor may directly or using other elements under the control of the processor perform a function corresponding to the instruction. The instruction may include a code generated by a compiler or executed by an interpreter.

## Claims

1. A robot cleaner (100, 1410), comprising:
a driver (110);
a sensor (120);
a memory (130) stored with a map of a space in which the robot cleaner (100, 1410) is located; and
a processor (140) configured to control the driver (110) for the robot cleaner (100, 1410) to drive in a cleaning region (1440, 1450) comprised in the map based on information obtained through the sensor (120),
wherein the processor (140) is configured to
identify a type of an obstacle (410, 510, 520, 610, 710, 810, 910, 1010, 1110, 1230, 1240, 1250, 1260, 1270, 1280, 1290, 1310, 1510, 1620, 1660) located in the cleaning region (1440, 1450) while the robot cleaner (100, 1410) is driving in the cleaning region (1440, 1450), and control the driver (110) to change a driving direction (820) of the robot cleaner (100, 1410) from different spaced distances for obstacles (410, 510, 520, 610, 710, 810, 910, 1010, 1110, 1230, 1240, 1250, 1260, 1270, 1280, 1290, 1310, 1510, 1620, 1660) of different types,
wherein the processor (140) is configured to
control, based on the obstacle being identified as an obstacle of a first type (410, 520, 610, 1110, 1230), the driver (110) for the robot cleaner (100, 1410) to change the driving direction (820) from a point that is spaced apart from the obstacle of the first type (410, 520, 610, 1110, 1230) by a first distance, and
control, based on the obstacle being identified as an obstacle of a second type (510, 710, 810, 910, 1010, 1240, 1250, 1260, 1270, 1280), the driver (110) for the robot cleaner (100, 1410) to change the driving direction (820) from a point that is spaced apart from the obstacle of the second type (510, 710, 810, 910, 1010, 1240, 1250, 1260, 1270, 1280) by a second distance,
wherein the second distance is shorter than the first distance, wherein
the processor (140) is configured to
control the driver (110) for the robot cleaner (100, 1410) to drive in a zigzag pattern by changing the driving direction (820) of the robot cleaner (100, 1410) from the point that is spaced apart from the obstacle of the first type (410, 520, 610, 1110, 1230) by the first distance, and
control the driver (110) for the robot cleaner (100, 1410) to rotate about the obstacle of the second type (510, 710, 810, 910, 1010, 1240, 1250, 1260, 1270, 1280) by changing the driving direction (820) of the robot cleaner (100, 1410) from the point that is spaced apart from the obstacle of the second type (510, 710, 810, 910, 1010, 1240, 1250, 1260, 1270, 1280) by the second distance,
and **characterized in that** the processor (140) is configured to identify a size of the obstacle of the second type (510, 710, 810, 910, 1010, 1240, 1250, 1260, 1270, 1280),
control, based on the size of the obstacle of the second type (510, 710, 810, 910, 1010, 1240, 1250, 1260, 1270, 1280) being less than a threshold size, the driver (110) for the robot cleaner (100, 1410) to drive in a same direction (820) as a previous driving direction (820) after rotating about the obstacle of the second type (510, 710, 810, 910, 1010, 1240, 1250, 1260, 1270, 1280), and
control, based on the size of the obstacle of the second type (510, 710, 810, 910, 1010, 1240, 1250, 1260, 1270, 1280) being greater than or equal to the threshold size, the driver (110) for the robot cleaner (100, 1410) to drive in a zigzag pattern after rotating about the obstacle of the second type (510, 710, 810, 910, 1010, 1240, 1250, 1260, 1270, 1280).

2. The robot cleaner (100, 1410) of claim 1, wherein
the processor (140) is configured to
control, based on a driving of the cleaning region (1440, 1450) being completed, the driver (110) for the robot cleaner (100, 1410) to drive along the obstacle of the first type (410, 520, 610, 1110, 1230).

3. The robot cleaner (100, 1410) of claim 1, wherein
the processor (140) is configured to
identify a size of the obstacle of the second type (510, 710, 810, 910, 1010, 1240, 1250, 1260, 1270, 1280) based on information obtained through the sensor (120) while the robot cleaner (100, 1410) rotates about the obstacle of the second type (510, 710, 810, 910, 1010, 1240, 1250, 1260, 1270, 1280) by one rotation,
control, based on the size of the obstacle of the second type (510, 710, 810, 910, 1010, 1240, 1250, 1260, 1270, 1280) being less than the threshold size, the driver (110) for the robot cleaner (100, 1410) to drive in the same direction (820) as the previous driving direction (820) after having additionally rotated about the obstacle of the second type (510, 710, 810, 910, 1010, 1240, 1250, 1260, 1270, 1280) by half a rotation, and
control, based on the size of the obstacle of the second type (510, 710, 810, 910, 1010, 1240, 1250, 1260, 1270, 1280) being greater than or equal to the threshold size, the driver (110) for the robot cleaner (100, 1410) to drive in one side region (1440, 1450) in the zigzag pattern with respect to the obstacle of the second type (510, 710, 810, 910, 1010, 1240, 1250, 1260, 1270, 1280).

4. The robot cleaner (100, 1410) of claim 1, wherein
the processor (140) is configured to
control, based on the robot cleaner (100, 1410) moving by a threshold distance while rotating about the obstacle of the second type (510, 710, 810, 910, 1010, 1240, 1250, 1260, 1270, 1280) by one rotation, the driver (110) for the robot cleaner (100, 1410) to return again to its original location after having reversed by a predetermined distance and for the robot cleaner (100, 1410) to move again from the returned location.

5. The robot cleaner (100, 1410) of claim 1, wherein
the map is divided into a plurality of regions (1440, 1450),
wherein the plurality of regions (1440, 1450) comprises a first region (1210, 1710) and a second region (1220, 1720) which are connected through a gate (1730),
the processor (140) is configured to,
control, based on the cleaning region (1440, 1450) being the first region (1210, 1710), the driver (110) for the robot cleaner (100, 1410) to drive in the first region (1210, 1710) based on a first division line (1740, 1750) set at the gate (1730), and control, based on the cleaning region (1440, 1450) being the second region (1220, 1720), the driver (110) for the robot cleaner (100, 1410) to drive in the second region (1220, 1720) based on a second division line (1740, 1750) set at the gate (1730),
wherein the first division line (1740, 1750) and the second division line (1740, 1750) are set at different locations within the gate (1730).

6. A driving method of a robot cleaner (100, 1410) which comprises a sensor (120), the method comprising:
identifying a type of obstacle (410, 510, 520, 610, 710, 810, 910, 1010, 1110, 1230, 1240, 1250, 1260, 1270, 1280, 1290, 1310, 1510, 1620, 1660) located in a cleaning region (1440, 1450) while driving in the cleaning region (1440, 1450) comprised in a map based on information obtained through the sensor (120); and
changing a driving direction (820) from different spaced distances for different type obstacles (410, 510, 520, 610, 710, 810, 910, 1010, 1110, 1230, 1240, 1250, 1260, 1270, 1280, 1290, 1310, 1510, 1620, 1660) while driving in the cleaning region (1440, 1450),
wherein
the changing the driving direction (820) comprises
changing, based on the obstacle being identified as an obstacle of a first type (410, 520, 610, 1110, 1230), the driving direction (820) from a point that is spaced apart from the obstacle of the first type (410, 520, 610, 1110, 1230) by a first distance, and changing, based on the obstacle being identified as an obstacle of a second type (510, 710, 810, 910, 1010, 1240, 1250, 1260, 1270, 1280), the driving direction (820) from a point that is spaced part from the obstacle of the second type (510, 710, 810, 910, 1010, 1240, 1250, 1260, 1270, 1280) by a second distance, wherein, the second distance is shorter than the first distance,
wherein
the changing the driving direction (820) further comprises
driving in a zigzag pattern by changing the driving direction (820) from the point that is spaced apart from the obstacle of the first type (410, 520, 610, 1110, 1230) by the first distance; and
rotating about the obstacle of the second type (510, 710, 810, 910, 1010, 1240, 1250, 1260, 1270, 1280) by changing the driving direction (820) from the point that is spaced part from the obstacle of the second type (510, 710, 810, 910, 1010, 1240, 1250, 1260, 1270, 1280) by the second distance,
and **characterized by**:
identifying a size of the obstacle of the second type (510, 710, 810, 910, 1010, 1240, 1250, 1260, 1270, 1280);
driving, based on the size of the obstacle of the second type (510, 710, 810, 910, 1010, 1240, 1250, 1260, 1270, 1280) being less than a threshold size, in a same direction (820) with a previous driving direction (820) after rotating about the obstacle of the second type (510, 710, 810, 910, 1010, 1240, 1250, 1260, 1270, 1280); and
driving, based on the size of the obstacle of the second type (510, 710, 810, 910, 1010, 1240, 1250, 1260, 1270, 1280) being greater than or equal to the threshold size, in a zigzag pattern after rotating about the obstacle of the second type (510, 710, 810, 910, 1010, 1240, 1250, 1260, 1270, 1280).

7. The method of claim 6, further comprising:
driving, based on a driving of the cleaning region (1440, 1450) being completed, along the obstacle of the first type (410, 520, 610, 1110, 1230).

8. The method of claim 6, wherein
the identifying the size of the obstacle of the second type (510, 710, 810, 910, 1010, 1240, 1250, 1260, 1270, 1280) comprises
identifying the size of the obstacle of the second type (510, 710, 810, 910, 1010, 1240, 1250, 1260, 1270, 1280) based on information obtained through the sensor (120) while rotating about the obstacle of the second type (510, 710, 810, 910, 1010, 1240, 1250, 1260, 1270, 1280) by one rotation,
the driving in the same direction (820) comprises
driving, based on the size of the obstacle of the second type (510, 710, 810, 910, 1010, 1240, 1250, 1260, 1270, 1280) being less than the threshold size, in the same direction (820) as the previous driving direction (820) after having additionally rotated about the obstacle of the second type (510, 710, 810, 910, 1010, 1240, 1250, 1260, 1270, 1280) by half a rotation, and
the driving in the zigzag pattern comprises
driving, based on the size of the obstacle of the second type (510, 710, 810, 910, 1010, 1240, 1250, 1260, 1270, 1280) being greater than or equal to the threshold size, in one side region (1440, 1450) in the zigzag pattern with respect to the obstacle of the second type (510, 710, 810, 910, 1010, 1240, 1250, 1260, 1270, 1280).

9. The method of claim 6, further comprising:
returning, based on moving by a threshold distance while rotating about the obstacle of the second type (510, 710, 810, 910, 1010, 1240, 1250, 1260, 1270, 1280) by one rotation, again to its original location after having reversed by a predetermined distance, and moving again from the returned location.

## Patentansprüche

1. Reinigungsroboter (100, 1410), umfassend:
einen Treiber (110);
einen Sensor (120);
einen Speicher (130), auf dem eine Karte eines Raums gespeichert ist, in dem sich der Reinigungsroboter (100, 1410) befindet; und
einen Prozessor (140), der dazu konfiguriert ist, den Treiber (110) zu steuern, damit der Reinigungsroboter (100, 1410) in einer in der Karte umfassten Reinigungsregion (1440, 1450) auf Grundlage von durch den Sensor (120) erlangten Informationen fährt,
wobei der Prozessor (140) konfiguriert ist zum
Identifizieren einer Art eines Hindernisses (410, 510, 520, 610, 710, 810, 910, 1010, 1110, 1230, 1240, 1250, 1260, 1270, 1280, 1290, 1310, 1510, 1620, 1660), das sich in der Reinigungsregion (1440, 1450) befindet, während der Reinigungsroboter (100, 1410) in der Reinigungsregion (1440, 1450) fährt, und Steuern des Treibers (110), damit er eine Fahrtrichtung (820) des Reinigungsroboters (100, 1410) aus unterschiedlichen beabstandeten Entfernungen für Hindernisse (410, 510, 520, 610, 710, 810, 910, 1010, 1110, 1230, 1240, 1250, 1260, 1270, 1280, 1290, 1310, 1510, 1620, 1660) unterschiedlicher Arten ändert,
wobei der Prozessor (140) konfiguriert ist zum
Steuern des Treibers (110), auf Grundlage davon, dass das Hindernis als Hindernis einer ersten Art (410, 520, 610, 1110, 1230) identifiziert wird, damit der Reinigungsroboter (100, 1410) die Fahrtrichtung (820) von einem Punkt, der von dem Hindernis der ersten Art (410, 520, 610, 1110, 1230) um eine erste Entfernung beabstandet ist, ändert, und
Steuern des Treibers (110), auf Grundlage davon, dass das Hindernis als Hindernis einer zweiten Art (510, 710, 810, 910, 1010, 1240, 1250, 1260, 1270, 1280) identifiziert wird, damit der Reinigungsroboter (100, 1410) die Fahrtrichtung (820) von einem Punkt, der von dem Hindernis der zweiten Art (510, 710, 810, 910, 1010, 1240, 1250, 1260, 1270, 1280) um eine zweite Entfernung beabstandet ist, ändert,
wobei die zweite Entfernung kürzer als die erste Entfernung ist, wobei
der Prozessor (140) konfiguriert ist zum
Steuern des Treibers (110), damit der Reinigungsroboter (100, 1410) in einem Zickzack-Muster fährt, durch Ändern der Fahrtrichtung (820) des Reinigungsroboters (100, 1410) von dem Punkt, der von dem Hindernis der ersten Art (410, 520, 610, 1110, 1230) um die erste Entfernung beabstandet ist, und
Steuern des Treibers (110), damit der Reinigungsroboter (100, 1410) sich um das Hindernis der zweiten Art (510, 710, 810, 910, 1010, 1240, 1250, 1260, 1270, 1280) dreht, durch Ändern der Fahrtrichtung (820) des Reinigungsroboters (100, 1410) von dem Punkt, der von dem Hindernis der zweiten Art (510, 710, 810, 910, 1010, 1240, 1250, 1260, 1270, 1280) um die zweite Entfernung beabstandet ist,
und **dadurch gekennzeichnet, dass** der Prozessor (140) konfiguriert ist zum
Identifizieren einer Größe des Hindernisses der zweiten Art (510, 710, 810, 910, 1010, 1240, 1250, 1260, 1270, 1280),
Steuern des Treibers (110), auf Grundlage davon, dass die Größe des Hindernisses der zweiten Art (510, 710, 810, 910, 1010, 1240, 1250, 1260, 1270, 1280) kleiner als eine Schwellengröße ist, damit der Reinigungsroboter (100, 1410) in eine gleiche Richtung (820) wie eine vorherige Fahrtrichtung (820) fährt, nach einem Drehen um das Hindernis der zweiten Art (510, 710, 810, 910, 1010, 1240, 1250, 1260, 1270, 1280), und
Steuern des Treibers (110), auf Grundlage davon, dass die Größe des Hindernisses der zweiten Art (510, 710, 810, 910, 1010, 1240, 1250, 1260, 1270, 1280) größer oder gleich der Schwellengröße ist, damit der Reinigungsroboter (100, 1410) nach einem Drehen um das Hindernis der zweiten Art (510, 710, 810, 910, 1010, 1240, 1250, 1260, 1270, 1280) in einem Zickzack-Muster fährt.

2. Reinigungsroboter (100, 1410) nach Anspruch 1, wobei
der Prozessor (140) konfiguriert ist zum
Steuern des Treibers (110), auf Grundlage davon, dass ein Abfahren der Reinigungsregion (1440, 1450) abgeschlossen ist, damit der Reinigungsroboter (100, 1410) entlang des Hindernisses der ersten Art (410, 520, 610, 1110, 1230) fährt.

3. Reinigungsroboter (100, 1410) nach Anspruch 1, wobei
der Prozessor (140) konfiguriert ist zum
Identifizieren einer Größe des Hindernisses der zweiten Art (510, 710, 810, 910, 1010, 1240, 1250, 1260, 1270, 1280) auf Grundlage von durch den Sensor (120) erlangten Informationen, während sich der Reinigungsroboter (100, 1410) um das Hindernis der zweiten Art (510, 710, 810, 910, 1010, 1240, 1250, 1260, 1270, 1280) um eine Drehung dreht,
Steuern des Treibers (110), auf Grundlage davon, dass die Größe des Hindernisses der zweiten Art (510, 710, 810, 910, 1010, 1240, 1250, 1260, 1270, 1280) kleiner als die Schwellengröße ist, damit der Reinigungsroboter (100, 1410) in die gleiche Richtung (820) wie die vorherige Fahrtrichtung (820) fährt, nach einem zusätzlichen Drehen um das Hindernis der zweiten Art (510, 710, 810, 910, 1010, 1240, 1250, 1260, 1270, 1280) um eine halbe Drehung, und
Steuern des Treibers (110), auf Grundlage davon, dass die Größe des Hindernisses der zweiten Art (510, 710, 810, 910, 1010, 1240, 1250, 1260, 1270, 1280) größer oder gleich der Schwellengröße ist, damit der Reinigungsroboter (100, 1410) in einer Seitenregion (1440, 1450) in dem Zickzack-Muster in Bezug auf das Hindernis der zweiten Art (510, 710, 810, 910, 1010, 1240, 1250, 1260, 1270, 1280) fährt.

4. Reinigungsroboter (100, 1410) nach Anspruch 1, wobei
der Prozessor (140) konfiguriert ist zum
Steuern des Treibers (110), auf Grundlage davon, dass sich der Reinigungsroboter (100, 1410) während eines Drehens um das Hindernis der zweiten Art (510, 710, 810, 910, 1010, 1240, 1250, 1260, 1270, 1280) um eine Drehung um eine Schwellenentfernung bewegt, damit der Reinigungsroboter (100, 1410) nach einem Rückwärtsfahren um eine vorbestimmte Entfernung wieder zu seinem ursprünglichen Standort zurückkehrt und damit sich der Reinigungsroboter (100, 1410) von der Rückkehrposition aus wieder bewegt.

5. Reinigungsroboter (100, 1410) nach Anspruch 1, wobei
die Karte in eine Vielzahl von Regionen (1440, 1450) unterteilt ist,
wobei die Vielzahl von Regionen (1440, 1450) eine erste Region (1210, 1710) und eine zweite Region (1220, 1720) umfasst, die durch ein Tor (1730) verbunden sind,
der Prozessor (140) konfiguriert ist zum
Steuern des Treibers (110), auf Grundlage davon, dass die Reinigungsregion (1440, 1450) die erste Region (1210, 1710) ist, damit der Reinigungsroboter (100, 1410) auf Grundlage einer ersten Teilungslinie (1740, 1750), die an dem Tor (1730) festgelegt ist, in der ersten Region (1210, 1710) fährt, und Steuern des Treibers (110), auf Grundlage davon, dass die Reinigungsregion (1440, 1450) die zweite Region (1220, 1720) ist, damit der Reinigungsroboter (100, 1410) auf Grundlage einer zweiten Teilungslinie (1740, 1750), die an dem Tor (1730) festgelegt ist, in der zweiten Region (1220, 1720) fährt,
wobei die erste Teilungslinie (1740, 1750) und die zweite Teilungslinie (1740, 1750) an unterschiedlichen Standorten innerhalb des Tors (1730) festgelegt sind.

6. Ansteuerungsverfahren eines Reinigungsroboters (100, 1410), der einen Sensor (120) umfasst, wobei das Verfahren Folgendes umfasst:
Identifizieren einer Art von Hindernis (410, 510, 520, 610, 710, 810, 910, 1010, 1110, 1230, 1240, 1250, 1260, 1270, 1280, 1290, 1310, 1510, 1620, 1660), das sich in einer Reinigungsregion (1440, 1450) befindet, während eines Fahrens in der in einer Karte umfassten Reinigungsregion (1440, 1450) auf Grundlage von durch den Sensor (120) erlangten Informationen; und
Ändern einer Fahrtrichtung (820) aus unterschiedlichen beabstandeten Entfernungen für unterschiedliche Arten von Hindernissen (410, 510, 520, 610, 710, 810, 910, 1010, 1110, 1230, 1240, 1250, 1260, 1270, 1280, 1290, 1310, 1510, 1620, 1660) während eines Fahrens in der Reinigungsregion (1440, 1450),
wobei
das Ändern der Fahrtrichtung (820) Folgendes umfasst:
Ändern der Fahrtrichtung (820), auf Grundlage davon, dass das Hindernis als Hindernis einer ersten Art (410, 520, 610, 1110, 1230) identifiziert wird, von einem Punkt, der von dem Hindernis der ersten Art (410, 520, 610, 1110, 1230) um eine erste Entfernung beabstandet ist, und Ändern der Fahrtrichtung (820), auf Grundlage davon, dass das Hindernis als Hindernis einer zweiten Art (510, 710, 810, 910, 1010, 1240, 1250, 1260, 1270, 1280) identifiziert wird, von einem Punkt, der von dem Hindernis der zweiten Art (510, 710, 810, 910, 1010, 1240, 1250, 1260, 1270, 1280) um eine zweite Entfernung beabstandet ist, wobei die zweite Entfernung kürzer als die erste Entfernung ist,
wobei
das Ändern der Fahrtrichtung (820) ferner Folgendes umfasst:
Fahren in einem Zickzack-Muster durch Ändern der Fahrtrichtung (820) von dem Punkt, der von dem Hindernis der ersten Art (410, 520, 610, 1110, 1230) um die erste Entfernung beabstandet ist; und
Drehen um das Hindernis der zweiten Art (510, 710, 810, 910, 1010, 1240, 1250, 1260, 1270, 1280) durch Ändern der Fahrtrichtung (820) von dem Punkt, der von dem Hindernis der zweiten Art (510, 710, 810, 910, 1010, 1240, 1250, 1260, 1270, 1280) um die zweite Entfernung beabstandet ist,
und **gekennzeichnet durch**:
Identifizieren einer Größe des Hindernisses der zweiten Art (510, 710, 810, 910, 1010, 1240, 1250, 1260, 1270, 1280);
Fahren, auf Grundlage davon, dass die Größe des Hindernisses der zweiten Art (510, 710, 810, 910, 1010, 1240, 1250, 1260, 1270, 1280) kleiner als eine Schwellengröße ist, in eine gleiche Richtung (820) wie eine vorherige Fahrtrichtung (820) nach einem Drehen um das Hindernis der zweiten Art (510, 710, 810, 910, 1010, 1240, 1250, 1260, 1270, 1280); und
Fahren, auf Grundlage davon, dass die Größe des Hindernisses der zweiten Art (510, 710, 810, 910, 1010, 1240, 1250, 1260, 1270, 1280) größer oder gleich der Schwellengröße ist, in einem Zickzack-Muster nach einem Drehen um das Hindernis der zweiten Art (510, 710, 810, 910, 1010, 1240, 1250, 1260, 1270, 1280).

7. Verfahren nach Anspruch 6, ferner umfassend:
Fahren, auf Grundlage davon, dass ein Abfahren der Reinigungsregion (1440, 1450) abgeschlossen ist, entlang des Hindernisses der ersten Art (410, 520, 610, 1110, 1230).

8. Verfahren nach Anspruch 6, wobei
das Identifizieren der Größe des Hindernisses der zweiten Art (510, 710, 810, 910, 1010, 1240, 1250, 1260, 1270, 1280) Folgendes umfasst:
Identifizieren der Größe des Hindernisses der zweiten Art (510, 710, 810, 910, 1010, 1240, 1250, 1260, 1270, 1280) auf Grundlage von durch den Sensor (120) erlangten Informationen während eines Drehens um das Hindernis der zweiten Art (510, 710, 810, 910, 1010, 1240, 1250, 1260, 1270, 1280) um eine Drehung,
das Fahren in die gleiche Richtung (820) Folgendes umfasst:
Fahren, auf Grundlage davon, dass die Größe des Hindernisses der zweiten Art (510, 710, 810, 910, 1010, 1240, 1250, 1260, 1270, 1280) kleiner als die Schwellengröße ist, in die gleiche Richtung (820) wie die vorherige Fahrtrichtung (820) nach einem zusätzlichen Drehen um das Hindernis der zweiten Art (510, 710, 810, 910, 1010, 1240, 1250, 1260, 1270, 1280) um eine halbe Drehung, und
das Fahren in dem Zickzack-Muster Folgendes umfasst:
Fahren, auf Grundlage davon, dass die Größe des Hindernisses der zweiten Art (510, 710, 810, 910, 1010, 1240, 1250, 1260, 1270, 1280) größer oder gleich der Schwellengröße ist, in einer Seitenregion (1440, 1450) in dem Zickzack-Muster in Bezug auf das Hindernis der zweiten Art (510, 710, 810, 910, 1010, 1240, 1250, 1260, 1270, 1280).

9. Verfahren nach Anspruch 6, ferner umfassend:
Zurückkehren, auf Grundlage eines Bewegens um eine Schwellenentfernung während eines Drehens um das Hindernis der zweiten Art (510, 710, 810, 910, 1010, 1240, 1250, 1260, 1270, 1280) um eine Drehung, wieder zu seinem ursprünglichen Standort nach einem Rückwärtsfahren um eine vorbestimmte Entfernung und Wiederbewegen von der Rückkehrposition aus.

## Revendications

1. Robot nettoyeur (100, 1410), comprenant :
un entraînement (110) ;
un capteur (120) ;
une mémoire (130) stockée avec une carte d'un espace dans lequel le robot nettoyeur (100, 1410) est situé ; et
un processeur (140) configuré de manière à commander l'entraînement (110) pour que le robot nettoyeur (100, 1410) se déplace dans une zone de nettoyage (1440, 1450) comprise dans la carte à partir d'informations obtenues par l'intermédiaire du capteur (120),
dans lequel le processeur (140) est configuré de manière à
identifier un type d'obstacle (410, 510, 520, 610, 710, 810, 910, 1010, 1110, 1230, 1240, 1250, 1260, 1270, 1280, 1290, 1310, 1510, 1620, 1660) situé dans la zone de nettoyage (1440, 1450) tandis que le robot nettoyeur (100, 1410) se déplace dans la zone de nettoyage (1440, 1450), et commander l'entraînement (110) pour changer une direction d'entraînement (820) du robot nettoyeur (100, 1410) à partir de différentes distances espacées pour des obstacles (410, 510, 520, 610, 710, 810, 910, 1010, 1110, 1230, 1240, 1250, 1260, 1270, 1280, 1290, 1310, 1510, 1620, 1660) de différents types,
dans lequel le processeur (140) est configuré de manière à
commander, à partir de l'identification de l'obstacle comme un obstacle d'un premier type (410, 520, 610, 1110, 1230), l'entraînement (110) pour que le robot nettoyeur (100, 1410) change la direction d'entraînement (820) à partir d'un point espacé de l'obstacle du premier type (410, 520, 610, 1110, 1230) par une première distance, et
commander, à partir de l'identification de l'obstacle comme un obstacle d'un deuxième type (510, 710, 810, 910, 1010, 1240, 1250, 1260, 1270, 1280), l'entraînement (110) pour que le robot nettoyeur (100, 1410) change la direction d'entraînement (820) à partir d'un point espacé de l'obstacle du deuxième type (510, 710, 810, 910, 1010, 1240, 1250, 1260, 1270, 1280) par une deuxième distance,
dans lequel la deuxième distance est inférieure à la première distance,
le processeur (140) étant configuré de manière à
commander l'entraînement (110) pour que le robot nettoyeur (100, 1410) se déplace en zigzag en changeant la direction d'entraînement (820) du robot nettoyeur (100, 1410) à partir du point espacé de l'obstacle du premier type (410, 520, 610, 1110, 1230) par la première distance, et
commander l'entraînement (110) pour que le robot nettoyeur (100, 1410) tourne autour de l'obstacle du deuxième type (510, 710, 810, 910, 1010, 1240, 1250, 1260, 1270, 1280) en changeant la direction d'entraînement (820) du robot nettoyeur (100, 1410) à partir du point espacé de l'obstacle du deuxième type (510, 710, 810, 910, 1010, 1240, 1250, 1260, 1270, 1280) par la deuxième distance,
et **caractérisé en ce que** le processeur (140) est configuré de manière à
identifier une taille de l'obstacle du deuxième type (510, 710, 810, 910, 1010, 1240, 1250, 1260, 1270, 1280),
commander, à partir du fait que la taille de l'obstacle du deuxième type (510, 710, 810, 910, 1010, 1240, 1250, 1260, 1270, 1280) est inférieure à une taille seuil, l'entraînement (110) pour que le robot nettoyeur (100, 1410) se déplace dans une même direction (820) qu'une direction d'entraînement précédente (820) après la rotation autour de l'obstacle du deuxième type (510, 710, 810, 910, 1010, 1240, 1250, 1260, 1270, 1280), et
commander, à partir du fait que la taille de l'obstacle du deuxième type (510, 710, 810, 910, 1010, 1240, 1250, 1260, 1270, 1280) est supérieure ou égale à la taille seuil, l'entraînement (110) pour que le robot nettoyeur (100, 1410) se déplace en zigzag après la rotation autour de l'obstacle du deuxième type (510, 710, 810, 910, 1010, 1240, 1250, 1260, 1270, 1280).

2. Robot nettoyeur (100, 1410) selon la revendication 1, dans lequel
le processeur (140) est configuré de manière à
commander, à partir de l'achèvement d'un déplacement dans la zone de nettoyage (1440, 1450), l'entraînement (110) pour que le robot nettoyeur (100, 1410) se déplace le long de l'obstacle du premier type (410, 520, 610, 1110, 1230).

3. Robot nettoyeur (100, 1410) selon la revendication 1, dans lequel
le processeur (140) est configuré de manière à
identifier une taille de l'obstacle du deuxième type (510, 710, 810, 910, 1010, 1240, 1250, 1260, 1270, 1280) à partir d'informations obtenues par le capteur (120) tandis que le robot nettoyeur (100, 1410) tourne autour de l'obstacle du deuxième type (510, 710, 810, 910, 1010, 1240, 1250, 1260, 1270, 1280) par une rotation,
commander, à partir du fait que la taille de l'obstacle du deuxième type (510, 710, 810, 910, 1010, 1240, 1250, 1260, 1270, 1280) est inférieure à la taille seuil, l'entraînement (110) pour que le robot nettoyeur (100, 1410) se déplace dans la même direction (820) que la direction d'entraînement précédente (820) après avoir en outre tourné autour de l'obstacle du deuxième type (510, 710, 810, 910, 1010, 1240, 1250, 1260, 1270, 1280) par demi-rotation, et
commander, à partir du fait que la taille de l'obstacle du deuxième type (510, 710, 810, 910, 1010, 1240, 1250, 1260, 1270, 1280) est supérieure ou égale à la taille seuil, l'entraînement (110) pour que le robot nettoyeur (100, 1410) se déplace dans une zone latérale (1440, 1450) en zigzag par rapport à l'obstacle du deuxième type (510, 710, 810, 910, 1010, 1240, 1250, 1260, 1270, 1280).

4. Robot nettoyeur (100, 1410) selon la revendication 1, dans lequel
le processeur (140) est configuré de manière à
commander, à partir du fait que le robot nettoyeur (100, 1410) se déplace d'une distance seuil tout en tournant autour de l'obstacle du deuxième type (510, 710, 810, 910, 1010, 1240, 1250, 1260, 1270, 1280) par une rotation, l'entraînement (110) pour que le robot nettoyeur (100, 1410) revienne à son emplacement d'origine après avoir reculé d'une distance prédéterminée et pour que le robot nettoyeur (100, 1410) se déplace à nouveau depuis l'emplacement de retour.

5. Robot nettoyeur (100, 1410) selon la revendication 1, dans lequel
la carte est divisée en une pluralité de zones (1440, 1450),
la pluralité de zones (1440, 1450) comprenant une première zone (1210, 1710) et une deuxième zone (1220, 1720) qui sont reliées par une porte (1730),
le processeur (140) est configuré de manière à
commander, à partir du fait que la zone de nettoyage (1440, 1450) est la première zone (1210, 1710), l'entraînement (110) pour que le robot nettoyeur (100, 1410) se déplace dans la première zone (1210, 1710) à partir d'une première ligne de division (1740, 1750) fixée à la porte (1730), et commander, à partir du fait que la zone de nettoyage (1440, 1450) est la deuxième zone (1220, 1720), l'entraînement (110) pour que le robot nettoyeur (100, 1410) se déplace dans la deuxième zone (1220, 1720) à partir d'une deuxième ligne de division (1740, 1750) fixée à la porte (1730),
la première ligne de division (1740, 1750) et la deuxième ligne de division (1740, 1750) étant fixées à des emplacements différents à l'intérieur de la porte (1730).

6. Procédé d'entraînement d'un robot nettoyeur (100, 1410) qui comprend un capteur (120),
le procédé comprenant :
l'identification d'un type d'obstacle (410, 510, 520, 610, 710, 810, 910, 1010, 1110, 1230, 1240, 1250, 1260, 1270, 1280, 1290, 1310, 1510, 1620, 1660) situé dans une zone de nettoyage (1440, 1450) tout en se déplaçant dans la zone de nettoyage (1440, 1450) comprise dans une carte à partir d'informations obtenues par le capteur (120) ; et
le changement d'une direction d'entraînement (820) à partir de différentes distances espacées pour différents types d'obstacles (410, 510, 520, 610, 710, 810, 910, 1010, 1110, 1230, 1240, 1250, 1260, 1270, 1280, 1290, 1310, 1510, 1620, 1660) tout en se déplaçant dans la zone de nettoyage (1440, 1450),
dans lequel
le changement de la direction d'entraînement (820) comprend
le changement, à partir de l'identification de l'obstacle en tant qu'obstacle d'un premier type (410, 520, 610, 1110, 1230), de la direction d'entraînement (820) à partir d'un point espacé de l'obstacle du premier type (410, 520, 610, 1110, 1230) par une première distance, et le changement, à partir de l'identification de l'obstacle en tant qu'obstacle d'un deuxième type (510, 710, 810, 910, 1010, 1240, 1250, 1260, 1270, 1280), de la direction d'entraînement (820) à partir d'un point espacé de l'obstacle du deuxième type (510, 710, 810, 910, 1010, 1240, 1250, 1260, 1270, 1280) par une deuxième distance, la deuxième distance étant inférieure à la première distance,
dans lequel
le changement de la direction d'entraînement (820) comprend en outre
un déplacement en zigzag par changement de la direction d'entraînement (820) à partir du point espacé de l'obstacle du premier type (410, 520, 610, 1110, 1230) par la première distance ; et
une rotation autour de l'obstacle du deuxième type (510, 710, 810, 910, 1010, 1240, 1250, 1260, 1270, 1280) par changement de la direction d'entraînement (820) à partir du point espacé de l'obstacle du deuxième type (510, 710, 810, 910, 1010, 1240, 1250, 1260, 1270, 1280) par la deuxième distance,
et **caractérisé par** :
l'identification d'une taille de l'obstacle du deuxième type (510, 710, 810, 910, 1010, 1240, 1250, 1260, 1270, 1280) ;
le déplacement, à partir du fait que la taille de l'obstacle du deuxième type (510, 710, 810, 910, 1010, 1240, 1250, 1260, 1270, 1280) est inférieure à une taille seuil, dans une même direction (820) qu'une direction d'entraînement précédente (820) après la rotation autour de l'obstacle du deuxième type (510, 710, 810, 910, 1010, 1240, 1250, 1260, 1270, 1280) ; et
le déplacement, à partir du fait que la taille de l'obstacle du deuxième type (510, 710, 810, 910, 1010, 1240, 1250, 1260, 1270, 1280) est supérieure ou égale à la taille seuil, en zigzag après la rotation autour de l'obstacle du deuxième type (510, 710, 810, 910, 1010, 1240, 1250, 1260, 1270, 1280).

7. Procédé selon la revendication 6, comprenant en outre :
un déplacement, à partir de l'achèvement d'un déplacement dans la zone de nettoyage (1440, 1450), le long de l'obstacle du premier type (410, 520, 610, 1110, 1230).

8. Procédé selon la revendication 6, dans lequel
l'identification de la taille de l'obstacle du deuxième type (510, 710, 810, 910, 1010, 1240, 1250, 1260, 1270, 1280) comprend
l'identification de la taille de l'obstacle du deuxième type (510, 710, 810, 910, 1010, 1240, 1250, 1260, 1270, 1280) à partir d'informations obtenues par le capteur (120) tout en tournant autour de l'obstacle du deuxième type (510, 710, 810, 910, 1010, 1240, 1250, 1260, 1270, 1280) par une rotation,
l'entraînement dans la même direction (820) comprend
le déplacement, à partir du fait que la taille de l'obstacle du deuxième type (510, 710, 810, 910, 1010, 1240, 1250, 1260, 1270, 1280) est inférieure à la taille seuil, dans la même direction (820) que la direction d'entraînement précédente (820) après avoir en outre tourné autour de l'obstacle du deuxième type (510, 710, 810, 910, 1010, 1240, 1250, 1260, 1270, 1280) par demi-rotation, et
le déplacement en zigzag comprend
le déplacement, à partir du fait que la taille de l'obstacle du deuxième type (510, 710, 810, 910, 1010, 1240, 1250, 1260, 1270, 1280) est supérieure ou égale à la taille seuil, dans une zone latérale (1440, 1450) en zigzag par rapport à l'obstacle du deuxième type (510, 710, 810, 910, 1010, 1240, 1250, 1260, 1270, 1280).

9. Procédé selon la revendication 6, comprenant en outre :
la retour, à partir du déplacement d'une distance seuil tout en tournant autour de l'obstacle du deuxième type (510, 710, 810, 910, 1010, 1240, 1250, 1260, 1270, 1280) par une rotation, à son emplacement d'origine après avoir reculé d'une distance prédéterminée et le déplacement à nouveau depuis l'emplacement de retour.
